# EUROPÄISCHE PATENTSCHRIFT

(11) **EP 1 700 054 B1**
(45) Veröffentlichungstag und Bekanntmachung des Hinweises auf die Patenterteilung: **25.02.2009**
(21) Anmeldenummer: 04790149.1
(22) Anmeldetag: 06.10.2004
(51) Int. Cl.: F16H 15/30

(54) **VERSTELLBARES GETRIEBE**
VARIABLE TRANSMISSION
TRANSMISSION VARIABLE

(30) Priorität: 22.12.2003 WO PCT/EP03/14744; 19.01.2004 DE 102004003584; 06.07.2004 EP 04015887
(43) Veröffentlichungstag der Anmeldung: 13.09.2006
(73) Patentinhaber: Hüttlin, Herbert, 79539 Lörrach (DE)
(72) Erfinder: Hüttlin, Herbert, 79539 Lörrach (DE)
(74) Vertreter: Dammertz, Ulrich
(86) Internationale Anmeldenummer: PCT/EP2004/011165
(87) Internationale Veröffentlichungsnummer: WO 2005/064205

(56) Entgegenhaltungen:
- BE-A- 528 958
- DE-B- 1 183 763
- DE-B- 1 235 094
- US-A- 3 654 692
- US-A- 4 235 127

## Beschreibung

Die Erfindung betrifft ein verstellbares Getriebe

Verstellbare Getriebe sind für zahlreiche Gebiete der Technik insbesondere dort bekannt, wo eine variable Übertragung von Drehbewegungen, d.h. eine Über- oder eine Untersetzung von Bedeutung ist. Der Einsatz solcher Getriebe ist im allgemeinen für Kraftfahrzeuge bekannt, um die Drehbewegung einer mit einem Motor gekoppelten Antriebswelle an eine mit z.B. den Antriebsrädern gekoppelte Abtriebswelle zu übertragen. Derartige Getriebe können als stufenlose Getriebe, d.h. sogenannte CVT-Getriebe ausgeführt sein. Des weiteren werden verstellbare Getriebe im Kraftfahrzeug auch als Differentialgetriebe eingesetzt.

Aus der DE 39 40 919 A1 ist eine Antriebsnabe mit einem stufenlos verstellbaren Reibradgetriebe bekannt, wobei ein Kraftschluß in dem Getriebe zwischen zwei Toroid-Scheiben durch eine Mehrzahl von Reibrädern erzielt wird. Die Übersetzung der Antriebsnabe lässt sich stufenlos verstellen, indem die Reibräder in ihrer Neigung relativ zu den Toroid-Scheiben mittels eines Gestänges verdreht werden.

Die WO 99/56037 offenbart ein stufenlos variables bzw. verstellbares Reibwalzen-Übersetzungsgetriebe, bei dem der Kraftschluß zwischen einer Eingangs- und einer Ausgangswelle durch das Abwälzen einer Mehrzahl von Reibrädern an jeweiligen Toroid-Platten erzielt wird. Das Übersetzungsgetriebe verfügt über einen Zahnradverstellmechanismus, durch den sich der Neigungswinkel der Reibräder in bezug auf die Toroid-Platten und damit das Übersetzungsverhältnis verändern lässt.

Die US 4 963 122 offenbart ein stufenlos variables Differentialgetriebe, bei dem zwei Reibräder in einem Ringzahnrad gehalten sind und jeweils mit sogenannten Ausgangsplatten, d.h. Toroid-Scheiben in Reibeingriff sind. Die Reibräder lassen sich in ihrem Reibungswinkel relativ zu den Toroid-Scheiben verstellen, so dass sich jeweils verschiedene Drehzahlen an den beiden Abtriebswellen des Differentialgetriebes einstellen können und damit das Differentialgetriebe seinen Zweck erfüllt.

Die DE 1235094 offenbart ein verstellbares Getriebe gemäß dem Oberbegriff von Anspruch 1. Ausgestaltungen sind in den abhängigen Ansprüchen aufgeführt.

Bei den voranstehend genannten herkömmlichen Getriebearten sind zum Erzielen eines hohen übertragbaren Drehmoments stets eine Mehrzahl von kranzförmig um die Drehachse angeordneten Reibrädern vorhanden. Dies bringt einen relativ hohen konstruktiven Aufwand mit sich und vergrößert zudem die Außenabmessungen des Getriebegehäuses. Des weiteren ist den genannten Druckschriften gemein, dass der erzielbare Bereich für eine Unter- bzw. Übersetzung vergleichsweise gering ist.

Entsprechend liegt der Erfindung die Aufgabe zugrunde, ein verstellbares Getriebe anzugeben, das mit konstruktiv einfachen Mitteln eine möglichst große Über- bzw. Untersetzung ermöglicht und kompakte Außenabmessungen aufweist.

Erfindungsgemäß wird die Aufgabe durch ein verstellbares Getriebe mit den Merkmalen von Anspruch 1 gelöst. Vorteilhafte Weiterbildungen der Erfindung sind Gegenstand der abhängigen Ansprüche.

Das erfindungsgemäße Getriebe zeichnet sich durch einen sehr kompakten und konstruktiv einfachen Aufbau aus, da nur ein Paar Reibschalen, d.h. zwei Reibschalen zum Einsatz kommen, die sich mit ihrer jeweils konkaven Fläche einander gegenüberliegen. Hierbei sind die Reibschalen in einem Gehäuse des Getriebes so gelagert aufgenommen, dass sie um ihre jeweilige Mittelachse drehbar sind. Das Getriebe weist eine Antriebswelle und eine Abtriebswelle auf, die jeweils mit einer der beiden Reibschalen zur Übertragung einer Drehbewegung zumindest radial gekoppelt sind.

Zwischen den beiden Reibschalen ist eine Reibradmitteleinrichtung um eine Drehachse verstellbar angeordnet, mittels der in geeigneter Weise ein Kraftfluss zwischen den Reibschalen erzielt wird. Die Reibradmitteleinrichtung kann mit beiden Reibschalen in Kontakt gebracht werden, wobei bei einer Verdrehung der Reibradmitteleinrichtung um die Drehachse das Übersetzungsverhältnis und auch die Richtung des übertragenen Kraftflusses des erfindungsgemäßen Getriebes in einem großen Bereich einstellbar ist. Übersetzungsverhältnis ist als übergeordneter Begriff zu verstehen, der sowohl eine Übersetzung ins Schnelle als auch eine Untersetzung ins Langsame einschließt. Der Aufbau der Reibradmitteleinrichtung und ihre Wechselwirkung mit den beiden Reibschalen ist nachfolgend noch im einzelnen erläutert.

Zweckmäßigerweise sind die beiden Reibschalen im wesentlichen halbkugelförmig ausgebildet. Die Antriebswelle und/oder die Abtriebswelle können koaxial zur jeweiligen Mittelachse der Reibschalen angeordnet sein, woraus eine besonders kompakte Bauform des Getriebes resultiert. Indem die Antriebswelle und die Abtriebswelle jeweils mit der ihr zugeordneten Reibschale zumindest radial gekoppelt sind, ist eine Übertragung der Drehbewegung von der Antriebswelle auf die ihr zugeordnete Reibschale und von der anderen der beiden Reibschalen auf die ihr zugeordnete Abtriebswelle gewährleistet.

Alternativ zu der koaxialen Anordnung von Antriebswelle und Abtriebswelle in bezug auf die jeweilige Mittelachse der Reibschalen ist es auch möglich, Antriebswelle und/oder Abtriebswelle abhängig vom Einsatzzweck des Getriebes axial versetzt zu der jeweiligen Mittelachse der Reibschalen anzuordnen. Hierdurch bleibt jedoch die Funktionsweise des erfindungsgemäßen Getriebes unberührt.

Die jeweiligen Endabschnitte der Antriebswelle und der Abtriebswelle können unmittelbar an den entsprechenden Reibschalen befestigt sein, so dass eine absolut verlustfreie Drehübertragung von der Antriebswelle auf die ihr zugeordnete Reibschalen bzw. von der jeweils anderen Reibschale auf die Abtriebswelle gewährleistet ist. Die jeweiligen Endabschnitte der Antriebswelle und der Abtriebswellen können an den entsprechenden Reibschalen bspw. geeignet angeschweißt oder aber einstückig daran angeformt sein.

Ein wesentlicher Aspekt des erfindungsgemäßen Getriebes ist durch ein Paar Reibräder gegeben, die in der Reibradmitteleinrichtung geeignet gelagert sind, und die in ihrem jeweiligen Abstand zu der Reibradmitteleinrichtung entlang ihrer Drehachse verstellt werden können. Durch diese Verstellbarkeit können die Reibräder mit ihrer Lauffläche wahlweise in Kontakt mit der konkaven Fläche einer jeweiligen Reibschale gebracht werden. Anders ausgedrückt ist die Reibradmitteleinrichtung derart zwischen den beiden Reibschalen angeordnet, dass eines der beiden Reibräder mit der antriebsseitigen Reibschale und das andere der beiden Reibräder mit der abtriebsseitigen Reibschale in Kontakt sein kann. Des weiteren kann auch nur eines der beiden Reibräder in Kontakt mit der antriebsseitigen Reibschale und mit der abtriebsseitigen Reibschale gebracht sein, wohingegen das jeweils andere Reibrad keinen Kontakt zu den Reibschalen hat. Durch die genannte Verschiebung der Reibräder entlang ihrer Drehachse relativ zu der Reibradmitteleinrichtung und ein daraus resultierendes Anpressen der Reibräder von innen gegen die Reibschalen können wahlweise auch Kupplungseffekte wie gewünscht eingestellt werden. Da hierbei die Reibschalen in dem Getriebegehäuse ortsfest gelagert sein können, ist auch eine Abdichtung des Getriebegehäuse wesentlich vereinfacht.

In vorteilhafter Weiterbildung der Erfindung kann zwischen den beiden Reibschalen ein Lagerungsflansch angeordnet sein, in dem die Reibradmitteleinrichtung um die Drehachse verstellbar gelagert ist. Der Lagerungsflansch kann die Form einer Scheibe haben, die in ihrer Mitte eine an die Reibradmitteleinrichtung angepasste Ausnehmung aufweist und somit eine erforderliche Bewegungsfreiheit der Reibradmitteleinrichtung für eine Verstellung des Getriebes sicherstellt.

In vorteilhafter Weiterbildung der Erfindung können die Reibräder radial miteinander gekoppelt sein. Diese Kopplung lässt sich bspw. mittels einer sog. Kronenkopfverbindung, einer Zapfwellenverbindung, einer Nut-Feder-Verbindung oder dergleichen erzielen. Zweckmäßigerweise können die Reibräder an einer dem jeweils anderen Reibrad zugewandten Seite ein Wellenelement aufweisen, welche in einen Mittenbereich der Reibradmitteeinrichtung hineinragen und miteinander radial gekoppelt sind. Die voranstehend genannte Kronenkopfverbindung, die Zapfwellenverbindung oder die Nut-Feder-Verbindung ist hierbei an den sich gegenüberliegenden Stirnabschnitten der jeweiligen Wellenelemente ausgebildet. Zweckmäßigerweise sind die Reibräder in der Reibradmitteleinrichtung einander gegenüberliegend gelagert aufgenommen, wobei die Mittelachsen der Reibräder zueinander koaxial sind. Eine solche Anordnung der Reibräder zueinander stellt in konstruktiv einfacher Weise die voranstehend genannte radiale Kopplung der Reibräder miteinander sicher, wonach eine Übertragung einer Drehbewegung von einem Reibrad auf das jeweils andere Reibrad sichergestellt ist. Zusätzlich führt diese Anordnung der Reibräder vorteilhaft zu einer gleichmäßigen Einleitung der durch das Verstellen der Reibräder hervorgerufenen Druckkräfte in das Gehäuse an gegenüberliegende Stellen.

In vorteilhafter Weiterbildung der Erfindung kann die Reibradmitteleinrichtung derart in dem Getriebegehäuse gelagert aufgenommen sein, dass die Drehachse, um die die Reibradmitteleinrichtung verdreht werden kann, orthogonal zu einer Ebene ist, in der die Mittelachsen der Reibschalen verlaufen. Vorteilhafterweise kann die Drehachse von zumindest der Mittelachse der antriebsseitigen Reibschale einen seitlichen Versatz aufweisen.

In einem Ausgangszustand der Reibradmitteleinrichtung nehmen die Reibräder jeweils einen kleinen Abstand zu der Reibradmitteleinrichtung ein, wobei keines der beiden Reibräder in Kontakt mit einer entsprechenden Reibschale ist. Erst bei einer Vergrößerung des Abstandes der Reibräder zu der Reibradmitteleinrichtung entlang ihrer Drehachse gelangen die Reibräder in einen Kontakt mit den entsprechenden Reibschalen. Durch eine geeignet gewählte Verstellung der Reibräder in Richtung der Reibschalen lässt sich gezielt ein Kraftfluss in dem Getriebe herstellen bzw. die Anpresskraft der jeweiligen Reibräder an eine entsprechende Reibschale regulieren. Der seitliche Versatz zwischen der Drehachse der Reibradmitteleinrichtung von zumindest der Mittelachse der antriebseitigen Reibschale stellt dabei ein Anpressen des Reibrades bzw. der Reibräder an die konkave Fläche der Reibräder in nur jeweils einem Flächenbereich sicher.

Für die voranstehend genannte Verstellung der Reibräder entlang ihrer Drehachse können sie in der Reibradmitteleinrichtung jeweils mittels eines Aufnahmeringkörpers gelagert sein, der in der Reibradmitteleinrichtung parallel zu der Achse entlang der die Reibräder verstellbar sind, verschiebbar aufgenommen ist. Der Aufnahmeringkörper kann hierbei aus einem hochfesten und gleichzeitig leichtem Material hergestellt sein, wie bspw. Titan, hochfester Stahl mit ggf. geeigneter Legierung, CFK-Kunststoff oder dergleichen. Zwischen den Aufnahmeringkörpern und einer mittleren Trennwand der Reibradmitteleinrichtung kann jeweils ein Druckraum gebildet sein, wobei eine Veränderung des Druckes in den Druckraum eine Verschiebung des Aufnahmeringkörpers relativ zu der Reibradmitteleinrichtung parallel zu der Achse bewirkt. Da die Reibräder an den Aufnahmeringkörpern gelagert sind, bewirkt die Verschiebung der Aufnahmeringkörper parallel zu der Drehachse der Reibräder die genannte Verstellung des Abstandes der Reibräder relativ zu der Reibradmitteleinrichtung.

Der Druckraum zwischen den Aufnahmeringkörpern und der mittleren Trennwand der Reibradmitteleinrichtung lässt sich wahlweise in einen Überdruckzustand und/oder in einen Unterdruckzustand versetzen. Für einen Überdruckzustand wird der Druckraum vorzugsweise mit einem Fluid wie z.B. ein Hydrauliköl von einer externen Versorgungseinrichtung gespeist, wobei dies über eine Schlauchverbindung oder über einen an der Reibradmitteleinrichtung vorgesehenen Drehrohrverteiler erfolgen kann, durch den ein jeweiliger Druckraum und die externe Versorgungseinrichtung miteinander verbunden sind. Wenn das Fluid mit einem voreingestellten Überdruck in den jeweiligen Druckraum geleitet wird, so werden die in der Reibradmitteleinrichtung aufgenommenen Aufnahmeringkörper entlang der Drehachse der Reibräder relativ zu der Reibradmitteleinrichtung nach außen gedrückt bzw. verschoben, wodurch die jeweiligen Reibräder in Kontakt mit den entsprechenden Reibschalen gebracht werden. Die radiale Kopplung zwischen den beiden Reibschalen in Form der Kronenkopfverbindung oder dergleichen ist dabei so ausgestaltet, dass eine Übertragung der Drehbewegung von einem Reibrad auf das jeweils andere Reibrad auch in dem Zustand weiterhin gewährleistet ist, in dem der jeweilige Abstand der Reibräder zu der Reibradmitteleinrichtung vergrößert ist. Des weiteren lässt sich eine Verstellung auch nur eines der beiden Reibräder vornehmen, wobei z.B. der Abstand des jeweils andere Reibrades zu der Reibradmitteleinrichtung unverändert bleibt. Dies ist bei der Einstellung eines Vorwärt- bzw. Rückwärtsganges von Bedeutung, was nachstehend noch im einzelnen erläutert ist.

Wenn die Reibräder wie voranstehend erläutert mittels einer Druckbeaufschlagung der Druckräume von der Reibradmitteleinrichtung nach außen, d.h. in Richtung der jeweiligen Reibschalen verstellt werden und dabei in Anlage mit den entsprechenden Reibschalen gelangen können, ist durch den seitlichen Versatz der Drehachse von zumindest der Mittelachse der antriebsseitigen Reibschale gewährleistet, dass die Reibräder bei einem eingestellten Vorwärtsgang des Getriebes nur an einer Stelle gegen die konkaven Flächen der entsprechenden Reibschalen gedrückt werden, wobei die Reibräder in einem Bereich, der der Kontaktstelle mit der Reibschale um ungefähr 180° entgegengesetzt ist, einen deutlichen Abstand von der jeweiligen Reibschale aufweisen. Anders ausgedrückt ist durch den seitlichen Versatz der Drehachse zu zumindest der Mittelachse der antriebsseitigen Reibschale sichergestellt, dass die Reibräder bei einem einstellten Vorwärtsgang nur an einer gezielten Stelle mit den jeweiligen Reibrädern in Kontakt sind, ohne dass es an einem jeweiligen Reibrad zu unerwünschten Schleifkontakten oder dergleichen mit einer Reibschale kommt, was einen nachteiligen Verschleiss und einen verminderten Wirkungsgrad des Betriebes zur Folge hätte.

Der Druckraum zwischen den jeweiligen Aufnahmeringkörpern und der mittleren Trennwand lässt sich ebenfalls in einen Unterdruckzustand versetzen, wobei der Druckraum entsprechend vakuumiert wird. Infolge dessen wird ein entsprechender Aufnahmeringkörper parallel zu der Drehachse der Reibräder in Richtung der Reibradmitteleinrichtung verschoben, so dass ein Abstand eines entsprechenden Reibrades zu der Reibradmitteleinrichtung verringert wird. Durch ein geeignetes "Besaugen" des Druckraums wird somit ein Abstand zwischen dem entsprechenden Reibrad und einer daran angrenzenden Reibschale vergrößert, so dass das Reibrad im Ergebnis keinen Kontakt mehr zu der Reibschale hat.

Durch eine geeignete Dosierung des Druckes in den jeweiligen Druckräumen lassen sich die Reibräder gezielt gegen die Reibschalen anpressen, so dass dadurch auch Kupplungseffekte erzielt werden können. Der Kraftfluss in dem Getriebe ist somit veränderlich, wobei das erzielte Über- bzw. Untersetzungsverhältnis auf einen neuen Wert eingestellt wird. Zweckmäßigerweise ist hierbei an den Oberflächen der Reibschalen und der Reibräder jeweils nur eine relativ feine Strukturierung ausgebildet, so dass eine Verdrehung der Reibradmitteleinrichtung um ihre Drehachse möglich ist, ohne dass dabei die Reibräder entlang ihrer Drehachse wesentlich zu verschieben sind.

In vorteilhafter Weiterbildung der Erfindung können die Reibräder auf den Aufnahmeringkörpern jeweils mittels einer Axial-Radial-Lagereinrichtung gelagert sein. Hierdurch ist eine vorteilhafte Aufnahme von Kräften jeweils aus verschiedenen Richtungen in die Lagereinrichtungen sichergestellt, was einen wartungsfreien Betrieb des erfindungsgemäßen Getriebes in Verbindung mit einer langen Lebensdauer möglich macht.

In vorteilhafter Weiterbildung der Erfindung können die Aufnahmeringkörper, an denen die jeweiligen Reibräder gelagert sind, durch eine Federeinrichtung in Richtung der Reibradmitteleinrichtung vorgespannt sein. Hierdurch nehmen die Aufnahmeringkörper in einem Ausgangszustand der Reibradmitteleinrichtung, wenn in dem jeweiligen Druckraum kein Druck anliegt, einen minimalen Abstand zu der Reibradmitteleinrichtung ein. Falls die Druckkammer mit einem Überdruck beaufschlagt werden, wird die Kraft der Federvorspannung ohne weiteres überwunden und die Aufnahmeringkörper nach außen verschoben, so dass das jeweilige Reibrad in einen Kontakt mit einer Reibschale kommt. Bei einem "Besaugen" einer Druckkammer, d.h. bei einem Anlegen eines Unterdruckes darin unterstützt die Vorspannung mittels der Federeinrichtung eine Verschiebung der Aufnahmeringkörper zurück in die Reibradmitteleinrichtung.

In vorteilhafter Weiterbildung der Erfindung kann die an einem Außenumfang eines jeweiligen Reibrades vorgesehene Lauffläche bezogen auf die Mitte ihres Kontaktbereiches mit einer entsprechenden Reibschale einen Durchmesser aufweisen, der im wesentlichen größer als der Radius der konkaven Fläche der Reibschale ist. Der Durchmesser der Lauffläche kann maximal einen Wert annehmen, der annähernd das Doppelte des Radius der Reibschale beträgt. Dieser relativ große Durchmesser der Lauffläche bewirkt vorteilhaft einen minimalen Verschleiß der Lauffläche und somit eine hohe Lebensdauer des Getriebes. Des weiteren ermöglicht der große Durchmesser der Lauffläche ein großes Übersetzungsverhältnis des Getriebes.

In vorteilhafter Weiterbildung der Erfindung kann die Breite der Lauffläche senkrecht zu ihrer Umfangsrichtung einen Wert von ungefähr 5 bis 20 % des Umfangs der konkaven Fläche in einer Ebene, in der die Drehachse der Antriebswelle und/oder der Abtriebswelle verläuft aufweisen. Vorzugsweise beträgt die Breite der Lauffläche 11 bis 13 % des Umfangs der konkaven Fläche. Hierdurch ist vorteilhaft eine Flächenberührung anstatt einer Linienberührung zwischen der Lauffläche und der konkaven Fläche sichergestellt, so dass ein optimaler Kraftfluss zwischen den Reibrädern und den Reibschalen erzielt wird.

In vorteilhafter Weiterbildung der Erfindung können die Flächennormalen jeweils bezogen auf die Mitte eines Kontaktbereiches eines Reibrades mit einer entsprechenden Reibschale miteinander einen Winkel einschließen, der vorzugsweise 90° beträgt. Durch einen solchen Winkel lässt sich mittels eines geeigneten Verstellens bzw. Verdrehens der Reibradmitteleinrichtung zwischen den beiden Reibschalen ein vorteilhaft großes Übersetzungsverhältnis erzielen.

Zweckmäßigerweise wird das erfindungsgemäße Getriebe mit einer Ölschmierung betrieben. Hierbei kann der kugelförmige Hohlraum, der zwischen den beiden Reibschalen gebildet ist, vollständig mit einem geeigneten Schmieröl gefüllt sein, so dass die Reibschalen und auch die jeweiligen Lagereinrichtungen der Reibschalen mit dem Schmieröl benetzt sind. Des weiteren kann hierbei auch die Reibradmitteleinrichtung vollständig in das Schmieröl eingetaucht sein. Da somit die Reibräder in das Schmieröl eingetaucht sind, ist eine Schmierung bzw. eine reibungsarme Lagerung derselben ohne weiteres gewährleistet. Insbesondere ist durch das Schmieröl oder dergleichen auch ein klemmfreies und reibungsarmes Verschieben der jeweiligen Aufnahmeringkörper in der Reibradmitteleinrichtung gegeben.

Ein wesentlicher Vorteil des erfindungsgemäßen Getriebes liegt in seinem großen Über- bzw. Untersetzungsverhältnis. Dieses große Verhältnis resultiert daraus, dass ein kleinstmöglicher Durchmesser ("Nulldurchmesser"), bei dem das antriebsseitige Reibrad in Kontakt mit der antriebsseitigen Reibschale steht, einhergeht mit einem größtmöglichen Durchmesser, bei dem das abtriebsseitige Reibrad in Kontakt mit der abtriebsseitigen Reibschale steht. In diesem Fall ist eine große Untersetzung ins Langsame gewährleistet. In gleicher Weise geht ein größtmöglicher Durchmesser, bei dem das antriebsseitige Reibrad in Kontakt mit der antriebsseitigen Reibschale steht, einher mit einem kleinstmöglichen Durchmesser, bei dem das abtriebsseitige Reibrad in Kontakt mit der abtriebsseitigen Reibschale steht. Dies führt zu einer vorteilhaft großen Übersetzung ins Schnelle.

Der vorteilhaft große Wert für das erzielbare Über- bzw. Untersetzungsverhältnis des erfindungsgemäßen Getriebes resultiert aus der Halbkugelform der beiden Reibschalen, so dass der sogenannte Nulldurchmesser, d.h. der voranstehend genannte kleinstmögliche Durchmesser, bei dem die jeweiligen Reibräder in Kontakt mit der ihnen zugeordneten Reibschale treten kann, einen kleinstmöglichen Wert annimmt. In diesem Zusammenhang ist ein wesentliches Merkmal der Erfindung, dass die Reibschalen um ihre jeweilige Mittelachse drehbar angeordnet sind.

In vorteilhafter Weiterbildung der Erfindung sind die Mittelachsen der beiden Reibschalen zueinander koaxial angeordnet, so dass die beiden Reibschalen um eine gemeinsame Achse drehen. Die Ausgestaltung der Reibschalen und die Anordnung der Reibradmitteleinrichtung zwischen den beiden Reibschalen ist hierbei geeignet so gewählt, dass sich bei einer geometrisch einfachen Form des Getriebegehäuses allein durch eine geeignete Verdrehung der Reibradmitteleinrichtung um die Drehachse ein sogenannter "Vorwärtsgang" bzw. ein sogenannter "Rückwärtsgang" einstellen lassen, wobei eine Beibehaltung der Drehrichtung bzw. eine Drehrichtungsumkehr der Abtriebswelle in bezug auf die Antriebswelle erfolgt.

Bei eingestelltem Vorwärtsgang des Getriebes kann ein jeweiliges Reibrad mit einer entsprechenden Reibschale auf der Antriebsseite und auf der Abtriebsseite auf der gleichen Seite einer Ebene, in der die Mittelachse zumindest der antriebsseitigen Reibschale liegt und die im wesentlichen parallel zu der Drehachse der Reibradmitteleinrichtung ist, in Kontakt gebracht werden, wobei in dieser Position der Reibräder ihre Drehachsen im wesentlichen parallel zu der Drehachse der Antriebswelle und/oder der Abtriebswelle sind. Dies hat zur Folge, dass die Drehrichtung der Antriebswelle mit der Drehrichtung der Abtriebswelle übereinstimmt, was z.B. bei einem Kraftfahrzeug einem Vorwärtsgang entspricht.

Bei einem eingestellten Rückwärtsgang des Getriebes findet eine Drehrichtungsumkehr zwischen Antriebswelle und Abtriebswelle statt. Hierbei ist nur eines der beiden Reibräder mit sowohl der Reibschale auf der Antriebsseite als auch mit der Reibschale auf der Abtriebsseite in Kontakt gebracht, wobei das jeweils andere Reibrad keinen Kontakt mit den Reibschalen hat und sich somit in einem Freilauf befindet. Das Reibrad, welches den Kraftfluss sicherstellt, ist dabei auf der gleichen Seite einer Ebene, in der die Mittelachse zumindest der antriebsseitigen Reibschale liegt und die im wesentlichen parallel zu der Drehachse zu der Reibradmitteleinrichtung ist, mit den jeweiligen Reibschalen in Kontakt gebracht. In dieser Position des Reibrades ist seine Drehachse im wesentlichen orthogonal zu der Drehachse der Antriebswelle und/oder der Abtriebswelle. Hierbei wird zweckmäßigerweise von der voranstehend genannten Verstellmöglichkeit der Reibräder relativ zu der Reibradmitteleinrichtung bzw. der Verschiebung der Aufnahmeringkörper innerhalb der Reibradmitteleinrichtung parallel zu den Drehachsen der Reibräder Gebrauch gemacht. Im einzelnen wird der Druckraum, der an den Aufnahmeringkörper des Reibrades angrenzt, das bei dem eingestellten Rückwärtsgang die Kraftübertragung sicherstellt, in einem Überdruckzustand versetzt, so dass das entsprechende Reibrad sowohl gegen die Reibschale auf der Antriebsseite als auch gegen die Reibschale auf der Abtriebsseite gepresst wird. Demgegenüber wird der Druckraum, der an den Aufnahmeringkörper des sich in einem Freilauf befindlichen Reibrades angrenzt, in einen Unterdruckzustand z.B. mittels eines Besaugens gebracht, wodurch dieses Reibrad einen minimalen Abstand zu der Reibradmitteleinrichtung annimmt und sich somit ein ausreichender Abstand zu den jeweiligen Reibschalen einstellt.

Die Positionierung bzw. die Verdrehung der Reibradmitteleinrichtung um die Drehachse zwischen den beiden Reibschalen lässt sich z.B. mittels einer Stange oder dergleichen erzielen, die an der Reibradmitteleinrichtung befestigt ist und aus dem Getriebegehäuse nach außen führt. Eine Drehung der Stange bewirkt eine entsprechende Verdrehung der Reibradmitteleinrichtung, und damit aufgrund einer geänderten Kontaktstelle der beiden Reibräder an den jeweiligen Reibschalen ein geändertes Übersetzungsverhältnis.

In weiterer vorteilhafter Weiterbildung der Erfindung ist anstelle der Stange zum Verstellen der Reibradmitteleinrichtung zumindest eine der beiden Reibschalen mit Magnetfeld-Wicklungen versehen, mit denen ein geeignetes Magnetfeld zum Verstellen der Reibradmitteleinrichtung erzeugt werden kann. Vorzugsweise weisen hierbei die beiden Reibschalen an ihrer Außenseite eine Hohlkammer auf, in der die Magnetfeld-Wicklungen jeweils aufgenommen sind.

Das übertragbare Moment des erfindungsgemäßen Getriebes lässt sich zweckmäßigerweise dadurch erhöhen, dass die konkave Fläche zumindest einer der beiden Reibschalen und/oder eine Lauffläche zumindest eines der beiden Reibräder eine Oberflächenstrukturierung aufweisen. Hierdurch wird der Kraftschluß zwischen den aufeinander abrollenden Flächen zusätzlich durch einen Formschluss überlagert, was letztlich zu einem erhöhten Kraftfluss in dem Getriebe führt. Die Oberflächenstrukturierung der jeweiligen Flächen kann bspw. aus mandelförmigen Noppen bzw. mandelförmigen Vertiefungen, aus halbkugelförmigen Noppen bzw. aus halbkugelförmigen Vertiefungen, sogenannten Kelchen oder aus einer Spitzzahnstruktur oder dergleichen bestehen, was im Ergebnis dazu führt, dass sich zwischen den aufeinander abrollenden Flächen ein vorteilhafter Formschluss einstellt. Hierbei wirkt sich die voranstehend genannte Verstellmöglichkeit zum axialen Verschieben der Reibräder vorteilhaft aus, so dass bei einem Verdrehen der Reibradmitteleinrichtung um die Drehachse die Reibräder kurzzeitig von den Reibschalen abgesetzt werden, so dass der Formschluss aufgehoben und dadurch ein Verdrehen der Reibradmitteleinrichtung ohne übermäßige Reibung ermöglicht wird. Durch das kurzzeitige Absetzen der Reibräder von den Reibschalen mittels einer geeigneten Steuerung des Druckes in den jeweiligen Druckräumen lassen sich die voranstehend genannten Kupplungseffekte auch bei der Oberflächenstrukturierung der Reibräder und Reibschalen in Form der Noppen, Kelche oder dergleichen ohne weiteres erzielen. Zu beachten hierbei ist, dass das Maß der jeweiligen Vertiefungen in den Oberflächen nicht zu groß gewählt ist, um einen klemmfreien Schräganlauf der Strukturierungen zu gewährleisten.

In vorteilhafter Weiterbildung der Erfindung ist im Bereich eines Scheitelpunkts einer jeweiligen Reibschale, welcher durch den voranstehend genannten Nulldurchmesser definiert ist, eine glatte Oberfläche bzw. keine Oberflächenstrukturierung ausgebildet. Es versteht sich, dass eine Positionierung der Reibradmitteleinrichtung derart, dass eines der beiden Reibräder in dem Bereich des Scheitelpunkts einer Reibschale zum stehen kommt, auszuschließen ist, da bei dieser Position eine Drehung der Reibschale das Reibrad nicht wie gewünscht in eine Drehung versetzt.

In vorteilhafter Weiterbildung der Erfindung kann zumindest eine der beiden Reibschalen an ihrer konkaven Fläche, die dem entsprechenden Reibrad zugewandt ist, mit einem faserverstärkten Kunststoff ausgekleidet sein, wozu sich insbesondere ein CFK-Material, d.h. ein kohlenfaserverstärkter Kunststoff eignet. Nachfolgend wird der faserverstärkte Kunststoff beispielhaft nur als das CFK-Material bezeichnet. Ohne weiteres ist es möglich, auch die vollständige Reibschale im wesentlichen aus einem solchen CFK-Material auszubilden. In gleicher Weise kann auch die Lauffläche zumindest eines der beiden Reibräder mit einem CFK-Material versehen sein. Alternativ dazu kann das Reibrad auch vollständig aus dem CFK-Material hergestellt sein.

Beim Einsatz des CFK-Materials bei zumindest einer der beiden Reibschalen oder bei zumindest einem der beiden Reibräder wird für den Werkstoff des damit in Kontakt tretenden Bauelementes vorzugsweise ein anderes Material gewählt. Anders ausgedrückt werden für die jeweiligen Werkstoffe des Reibrades bzw. der Reibschale unterschiedliche Materialien als Reibpartner gewählt. Dies wirkt sich positiv auf einen störungsfreien Betrieb des Getriebes und auf seine zu erwartende Lebensdauer aus.

Im Falle der Verwendung des CFK-Materials für die Reibschalen bzw. die Reibräder kann auf eine Schmierung der Reibräder in Kontakt mit den Reibschalen verzichtet werden. Anders ausgedrückt ist der zwischen den beiden Reibschalen gebildete kugelförmige Hohlraum nicht mit einem Schmieröl gefüllt, so dass die Reibräder mit ihren Laufflächen trokken an den konkaven Flächen der Reibschalen abrollen. Entsprechend sind die übrigen Lagereinrichtungen in dem Getriebegehäuse wie oben erläutert fremdgeschmiert. Des weiteren ist insbesondere auch eine geeignete Schmierung der Aufnahmeringkörper relativ zu der Reibradmitteleinrichtung sicherzustellen.

Alternativ oder ergänzend zu dem CFK-Material kann die konkave Fläche zumindest einer beiden Reibschalen und/oder die Lauffläche zumindest eines der beiden Reibräder auch mit einer molybdänbeschichteten Metallegierung versehen sein. Dieser Werkstoff zeichnet sich durch seine exzellente Härte aus. In Verbindung z.B. mit Titan ergibt sich eine Reibpaarung, die ggf. ohne eine Fremdschmierung auskommt.

In vorteilhafter Weiterbildung der Erfindung ist auf eines der beiden Reibräder ein sogenannter Radring aufgesetzt, mit dem das Reibrad an der entsprechenden Reibschale abrollt. Der Radring weist zweckmäßigerweise einen größeren Durchmesser als das Reibrad auf. Im Ergebnis steht der Radring mit seiner Innenseite nur dort mit einer Außenfläche des Reibrades in Kontakt, wo er an seiner Außenseite an der Reibschale abrollt. Ohne die voranstehend erläuterte-Ausgestaltung von Reibrädern und Reibschalen wesentlich zu verändern, ist somit ein solcher Radring lediglich zwischen Reibrad und Reibschalen geschoben und übernimmt im Betrieb des Getriebes die Funktion eines sogenannten vermittelnden Rades. Um eine sichere Führung des Radrings an dem Reibrad zu gewährleisten, ist der Radring in seiner Breite im wesentlichen übereinstimmend mit dem Reibrad ausgebildet, so dass eine Außenfläche des Reibrades im wesentlichen vollständig mit einer Innenfläche des Reibrades in Kontakt ist. Der Radring ist also ohne zusätzlich vorgesehene Fixierung allein durch den montierten Zustand des Getriebes sicher an dem entsprechenden Reibrad geführt, auch wenn die Reibradmitteleinrichtung zur Veränderung des Übersetzungsverhältnisses verdreht wird. Gleiches gilt für ein axiales Zurückstellen der Reibräder, da die Reibräder jeweils bspw. nur um einige Zehntel mm axial von den entsprechenden Reibschalen wegbewegt werden, ohne dass dabei die Radringe außer Führung geraten.

Der Radring kann bspw. aus einem Hartgummi oder dergleichen bestehen, falls das Reibrad bzw. die entsprechenden Reibräder aus einem Stahl hergestellt sind. Im allgemeinen ist in bezug auf den Kontakt zwischen Radring und Reibschale ein relativ weiches Material mit einem relativ harten Material in Berührung, oder umgekehrt.

An der Innenseite des Radringes, die in Kontakt mit einer Außenfläche des Reibrades ist, kann eine Profilierung vorgesehen sein, die mit einer Oberflächenstrukturierung des Reibrades komplementär ausgebildet ist. In gleicher Weise kann die Außenseite des Radringes, die an der konkaven Fläche einer entsprechenden Reibschale abrollt, eine Profilierung aufweisen, die komplementär zu einer ggf. vorgesehenen Oberflächenstrukturierung der konkaven Fläche der Reibschale ausgebildet ist.

Falls die beiden Reibschalen in Form einer Halbkugel ausgebildet sind, sind die Laufflächen der jeweiligen Reibräder zweckmäßigerweise mit einer sogenannten konischen Balligkeit ausgebildet. Die Lauffläche weist somit auf einer ihrer Seiten einen größeren Durchmesser auf als auf der anderen Seite. Dies hat zur Folge, dass die Lauffläche der Reibräder an die Kontur der entsprechenden Reibschale angepasst ist. Im Ergebnis sind somit die internen Reibungen an der Kontaktfläche zwischen der Lauffläche eines Reibrades und der Reibschale vollständig eliminiert bzw. auf ein Mindestmaß herabgesetzt. Ohne weiteres kann die voranstehend erläuterte konische Balligkeit der Laufflächen auch gleichzeitig mit einer möglichen Oberflächenstrukturierung der Laufflächen vorgesehen sein.

In vorteilhafter Weiterbildung der Erfindung ist zumindest ein Reibrad mit einer Mehrzahl von Gleitelementen versehen. Diese Gleitelemente sind seitlich aneinander angrenzend an einem Außenumfang des Reibrades aufgenommen und darin senkrecht zur Umfangsrichtung der Lauffläche des Reibrades verschieblich gelagert. In Umfangsrichtung der Lauffläche jedoch sind die Gleitelemente nicht verschieblich, um wie gewünscht einen Kraftfluss zwischen Reibrad und Reibschale sicherzustellen, wenn das Reibrad an der Reibschale abrollt. In einem Ausgangszustand sind die Gleitelemente in ihrer Lagerung bspw. zentrisch aufgenommen und können sich in beide Richtungen ihrer Verschieblichkeit gegen einen Anschlag bewegen. Vorteilhaft sind die Gleitelemente in ihrer Lagerung durch Federeinrichtungen von beiden Seiten in ihrer zentrischen Position vorgespannt.

Bei einer Verdrehung der Reibradmitteleinrichtung um ihre Drehachse wird das Gleitelement, das beim Abrollen des Reibrades jeweils in Kontakt mit der konkaven Fläche der Reibschale ist, in seine seitliche Anschlagsposition verschoben, was einen geringeren Verschleiss der Kontaktfläche zwischen Reibrad und Reibschale bewirkt, wobei jedoch wegen der Nicht-Verschieblichkeit der Gleitelemente in Umfangsrichtung der Lauffläche der genannte Kraftfluss gewährleistet ist. Des weiteren können die Gleitelemente in ihren Lagerungen in radialer Richtung des Reibrades verschieblich aufgenommen sein, so dass sie bei einer Drehung der Reibräder infolge der Fliehkraft nach außen bewegt werden. Hierdurch werden die Gleitelemente, die an ein mit der Reibschale in Kontakt stehendes Gleitelement angrenzen, nach außen bewegt, so dass die wirksame Eingriffsfläche zwischen der Lauffläche des Reibrades und der konkaven Fläche der Reibschale vorteilhaft vergrößert wird. Dieser Effekt stellt sich insbesondere bei einer Oberflächenstrukturierung der Lauffläche bzw. der konkaven Fläche ein.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt einen Längsschnitt eines erfindungsgemäßen Getriebes bei eingestelltem Vorwärtsgang mit einer Untersetzung ins Langsame.
- Figur 2: zeigt das Getriebe von Figur 1 bei eingestelltem Vorwärtsgang mit einer Übersetzung ins Schnelle.
- Figur 3: zeigt das Getriebe von Figur 1 bei eingestelltem Rückwärtsgang mit einer Untersetzung ins Langsame.
- Figur 4: zeigt das Getriebe von Figur 1 bei eingestelltem Rückwärtsgang mit einer Übersetzung ins Schnelle.
- Figur 5: zeigt einen Längsschnitt des Getriebes entlang der Linien A-A von Figur 1 mit einer Verstellstange zum Verstellen einer Reibradmitteleinrichtung.
- Figur 6: zeigt das erfindungsgemäße Getriebe in einer teilweise freigelegten perspektivischen Seitenansicht bei eingestelltem Vorwärtsgang mit einer Untersetzung ins Langsame.
- Figur 7: zeigt das Getriebe von Figur 6 bei eingestelltem Rückwärtsgang mit einer Untersetzung ins Langsame.

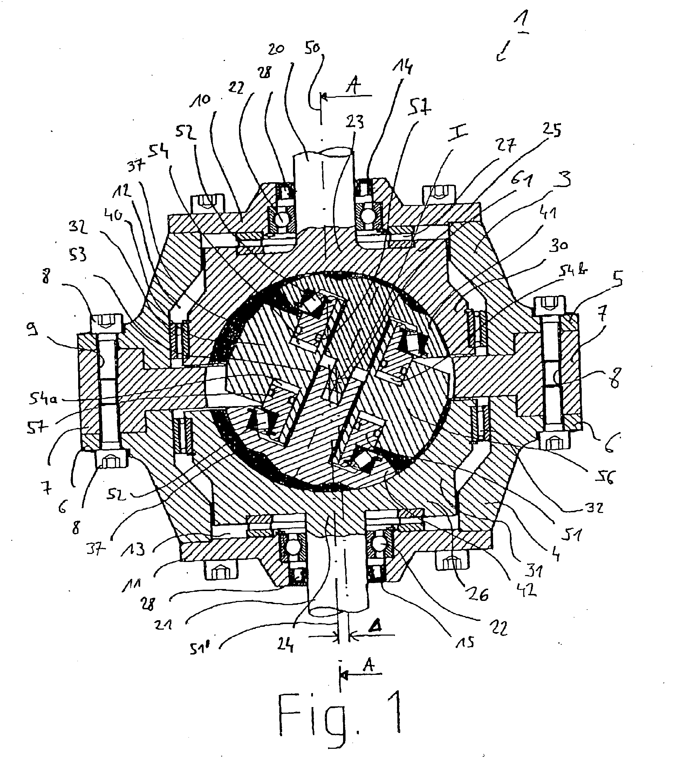

In den nachfolgenden Figuren 1 bis 7 sind bevorzugte Ausführungsformen des erfindungsgemäßen Getriebes im einzelnen erläutert. Gleiche Bauteile sind hierbei mit gleichen Bezugsziffern versehen und zur Vermeidung von Wiederholungen lediglich einmal erläutert.

Figur 1 zeigt einen Längsschnitt durch ein erfindungsgemäβes verstellbares Getriebe 1. Ein Gehäuse des Getriebes 1 besteht im wesentlichen aus einem oberen Gehäuseteil 3 und aus einem unteren Gehäuseteil 4, die jeweils kreiszylindrisch ausgebildet sind. In einem Bereich des oberen Gehäuseteils 3 und des unteren Gehäuseteils 4, welche Bereiche sich gegenüberliegen, ist jeweils ein umlaufender Flansch 5, 6 ausgebildet. Zwischen dem oberen Gehäuseteil 3 und dem unteren Gehäuseteil 4 ist des weiteren ein Lagerungsflansch 7 aufgenommen, der in Anpassung an die Form des oberen Gehäuseteils 3 und des unteren Gehäuseteils 4 vorzugsweise kreisförmig ausgebildet ist. In einem Außenbereich des Lagerungsflansches 7 ist eine Mehrzahl von Durchgangsbohrungen 8 ausgebildet, die jeweils mit einem Gewinde versehen sind. Wenn der obere Gehäuseteil 3 und der untere Gehäuseteil 4 jeweils auf dem Lagerungsflansch 7 aufgesetzt sind, lassen sich die genannten Teile mittels geeigneter Verschraubungen 9, die in das Gewinde der Durchgangsbohrungen 8 eingreifen, geeignet miteinander verbinden. Die Funktion des Lagerungsflansches 7 ist weiter unten noch im einzelnen erläutert.

Der obere Gehäuseteil 3 bzw. der untere Gehäuseteil 4 werden in gleicher Weise von einem oberen Gehäusedeckel 10 bzw. von einem unteren Gehäusedeckel 11 verschlossen, wobei die beiden Deckel, 10, 11 mittels einer geeigneten Verschraubung mit einer jeweiligen Stirnseite des oberen Gehäuseteils 3 bzw. des unteren Gehäuseteils 4 verschraubt sind. Sowohl der obere Gehäuseteil 3 als auch der untere Gehäuseteil 4 sind ursprünglich in Form einer Zylinderbuchse ausgebildet, so dass sich innerhalb dieser Teile bei jeweils aufgesetzten Gehäusedeckeln ein abtriebsseitiger Hohlraum 12 und ein antriebsseitiger Hohlraum 13 bildet. In einer zentrischen Mitte des oberen Gehäusedeckels 10 und des unteren Gehäusedeckels 11 ist jeweils eine Ausnehmung 14, 15 ausgebildet, durch die hindurch eine Abtriebswelle 20 bzw. eine Antriebswelle 21 geführt ist. In dem oberen Gehäusedeckel 10 und dem unteren Gehäusedeckel 11 sind jeweils Radiallagereinrichtungen 22 eingepasst, mittels derer die Abtriebswelle 20 und die Antriebswelle 21 in dem Getriebe 1 gelagert aufgenommen sind.

Die Abtriebswelle 20 und die Antriebswelle 21 weisen an ihren jeweiligen Stirnseiten 23, 24 einen radial verbreiterten Flanschabschnitt 25, 26 auf. Zwischen einer jeweiligen Unterseite des oberen Gehäusedeckels 10 bzw. des unteren Gehäusedeckels 11 und einer jeweiligen oberen Fläche des Flanschabschnitts 25 bzw. des Flanschabschnitts 26 ist eine Axiallagereinrichtung 27 eingepasst, wodurch die Abtriebswelle 20 und die Antriebswelle 21 gegenüber den jeweiligen Gehäusedeckeln 10, 11 auch in axialer Richtung gelagert sind. Am Innenrand der Ausnehmungen 14, 15 des oberen Gehäusedeckels 10 bzw. des unteren Gehäusedeckels 11 ist jeweils eine Wellendichteinrichtung 28 eingepasst, die sich mit einer Dichtlippe an die Abtriebswelle 20 bzw. die Antriebswelle 21 anlegt. Dadurch ist wirksam ein Eindringen von Schmutzpartikeln in das Innere des Getriebes 1 als auch ein Austreten von Schmiermitteln aus dem Getriebe heraus verhindert.

Ein wesentliches Konstruktionsmerkmal des erfindungsgemäßen Getriebes 1 ist durch ein Paar Reibschalen gebildet, nämlich eine abtriebsseitige obere Reibschale 30 und eine antriebsseitige untere Reibschale 31. Beide Reibschalen 30, 31 sind vorzugsweise in Form einer Halbkugel ausgebildet. Im einzelnen ist die obere Reibschale 30 in dem abtriebsseitigen Hohlraum 12 aufgenommen und darin mittels eines radialen Rollen- , Kugel- oder Nadellager 32 gelagert, das in einem an den Lagerungsflansch 7 angrenzenden Bereich des oberen Gehäuseteils 3 eingepasst ist. In dem antriebsseitigen Hohlraum 13 ist spiegelbildlich zur oberen Reibschale die untere Reibschale 31 aufgenommen, wobei diese in dem unteren Gehäuseteil 4 ebenfalls durch ein radiales Rollen-, Kugel- oder Nadellager 32 gelagert aufgenommen ist. Die Ausgestaltung der unteren Reibschale 31 ist vorzugsweise achsensymmetrisch zur oberen Reibschale 30, wobei die jeweiligen Mittelachsen der oberen Reibschale 30 und der unteren Reibschale 31 koaxial zueinander sind. Beide Reibschalen 30, 31 können mit der Abtriebswelle 20 bzw. der Antriebswelle 21 geeignet mittels einer Schweißverbindung oder dergleichen verbunden sein, so dass zwischen der Antriebswelle bzw. der Abtriebswelle und den entsprechenden Reibschalen eine radial gekoppelte bzw. eine drehfeste Verbindung besteht. Alternativ hierzu können die entsprechenden Reibschalen auch einstückig an den jeweiligen Endabschnitten von Antriebswelle bzw. Abtriebswelle ausgebildet sein. Die identische Ausbildung der unteren Reibschale 31 und der oberen Reibschale 30 bringt signifikante Kosteneinsparung bei der Herstellung des erfindungsgemäßen Getriebes 1 mit sich.

Die Darstellung von Figur 1 verdeutlicht, dass sich die beiden Reibschalen 30, 31 einander mit ihren konkaven Flächen 37 gegenüberliegen. Die obere Reibschale 30 als auch die untere Reibschale 31 weisen jeweils eine Mittelachse 50, 51 auf. Bei der in Figur 1 gezeigten Ausführungsform sind die beiden Reibschalen 30, 31 koaxial zueinander angeordnet, so dass die Mittelachsen 50, 51 der Reibschalen aufeinanderliegen. Aus der voranstehend erläuterten Lagerung der beiden Reibschalen 30, 31 in dem Getriebegehäuse folgt, dass sich die beiden Reibschalen 30, 31 innerhalb des Getriebegehäuses jeweils um ihre Mittelachsen 50, 51 drehen. Da die obere und untere Reibschale 30, 31 wie voranstehend erläutert die Form einer Halbkugel aufweisen, wird somit zwischen den beiden Reibschalen ein kugelförmiger Hohlraum gebildet. In diesem Hohlraum ist eine Reibradmitteleinrichtung 40 aufgenommen, die an dem Lagerungsflansch 7 drehbar befestigt ist. Hierbei ist eine Drehachse I, um den die Reibradmitteleinrichtung drehbar verstellbar ist, von der Mittelachse 50 der oberen Reibschale 30 als auch der Mittelachse 51' der unteren Reibschale 31 seitlich versetzt. Dieser seitliche Versatz ist in Figur 1 durch "Δ" bezeichnet.

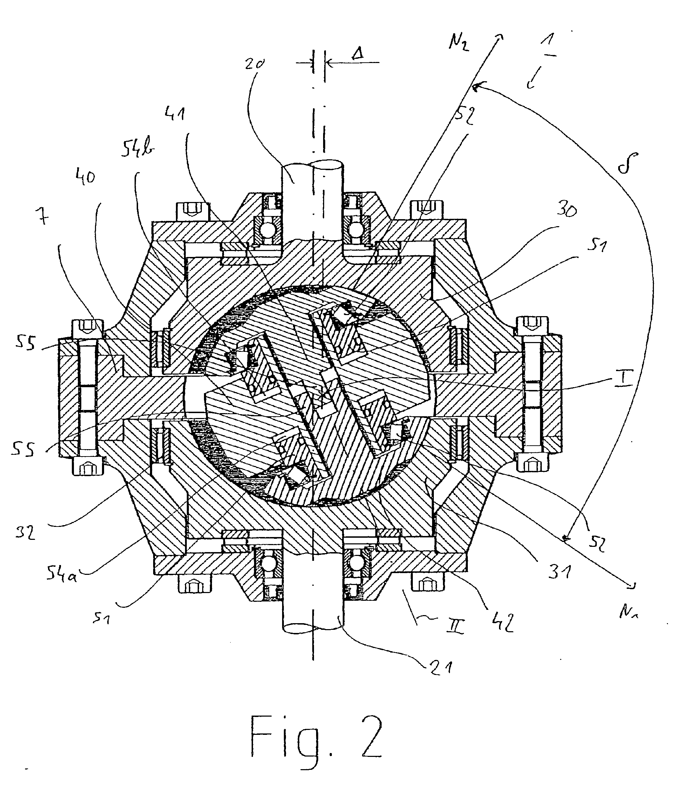

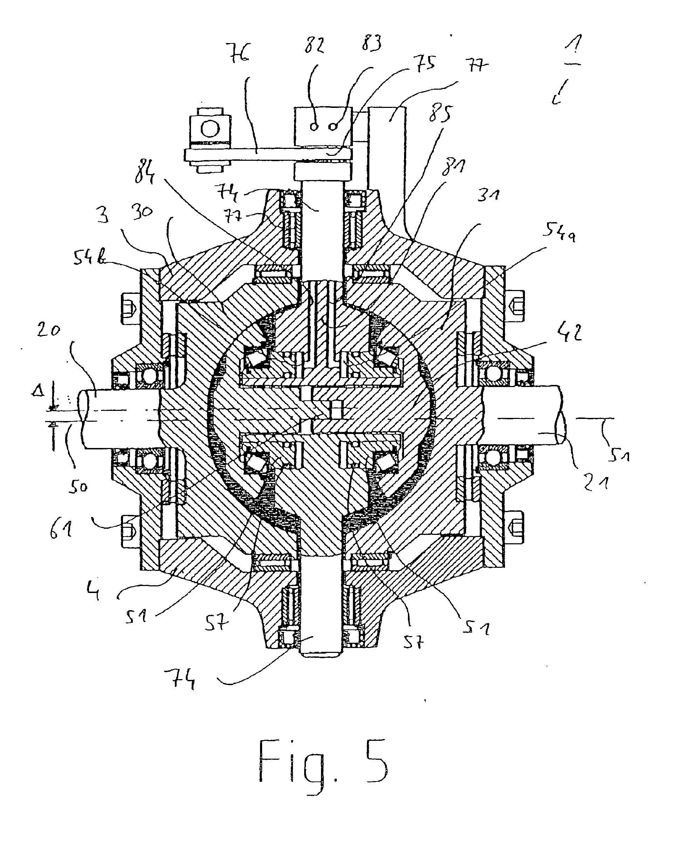

Die Reibradmitteleinrichtung 40 dient zur Aufnahme eines Paars Reibräder, nämlich eines abtriebsseitigen Reibrades 41 und eines antriebsseitigen Reibrades 42. Zur Vereinfachung wird nachfolgend die Reibradmitteleinrichtung 40 nur kurz als "Küken" bezeichnet. Die Reibräder 41, 42 sind in ihrem jeweiligen Abstand zu dem Küken 40 entlang ihrer Drehachse II (Figur 2) verstellbar. Hierzu sind an den entgegengesetzten Seiten des Kükens 40 jeweils Aufnahmeringkörper 51 aufgenommen, die in dem Küken 40 parallel zu der Drehachse II der Reibräder verstellbar sind. Die Reibräder 41, 42 sind durch geeignete Lagereinrichtungen an den freien Endabschnitten der jeweiligen Aufnahmeringkörper 51 gelagert. Zweckmäßigerweise sind diese Lagereinrichtungen als Axial-Radial-Lagereinrichtungen 52 ausgebildet, so dass Kräfte aus verschiedenen Richtungen von den Reibrädern in die Aufnahmeringkörper 51 geleitet werden können. Zwischen einer Stirnseite der Aufnahmeringkörper 51, die der Axial-Radial-Lagereinrichtung 52 entgegengesetzt ist, und einer mittleren Trennwand 53 des Kükens 40 sind jeweils Druckräume 54a, 54b ausgebildet, die z.B. mit einem Fluid gespeist oder alternativ mittels einer Vakuumierung besaugt werden können. Die Speisung der Druckräume 54a, 54b erfolgt zweckmäßigerweise durch ein Hydrauliköl oder dergleichen, dass z.B. durch eine externe Versorgungseinrichtung bereitgestellt wird. Die Zuführung des Hydrauliköls an die Druckräume 54 kann mittels einer Schlauchverbindung oder aber auch durch einen Drehrohrverteiler 81 (Figur 5) erfolgen, der an der Reibradmitteleinrichtung 40 vorgesehen ist.

Als eine weitere Maßnahme zur effizienten Steigerung der übertragbaren Momente und auch zur Einstellung eines Freilaufzustandes der Reibräder bzw. eines Vorwärts- und Rückwärtsganges des Getriebes können die Aufnahmeringkörper 51 relativ zu dem Küken 40 parallel zu der Drehachse II verschoben werden. In einem Ausgangszustand befinden sich die Aufnahmeringkörper 51 in einem eingefahrenen Zustand in dem Küken 40, wobei die Reibräder 41, 42 einen minimalen Abstand zu dem Küken einnehmen und dabei keinen Kontakt zu den Reibschalen 30, 31 haben. In diesem Zustand befinden sich die Reibräder 41, 42 in einem Freilauf. Wenn ein Fluid in Form eines Hydrauliköls oder dergleichen mit Überdruck in die Druckräume 54 geleitet wird, so werden die Aufnahmeringkörper 51 parallel zu der Achse aus dem Küken 40 heraus verschoben. Im Ergebnis nimmt der Abstand der Reibräder 41, 42 zu dem Küken zu, wobei die Reibräder 41, 42 in Kontakt mit einer entsprechenden Reibschale 30, 31 gebracht werden können. In Abhängigkeit von dem Überdruck in den Druckräumen 54a, 54b werden die Reibräder 41, 42 somit von innen gegen die konkaven Flächen 37 der Reibschalen 30, 31 gedrückt, so dass daraus die notwendigen Reibkräfte zwischen Reibrädern und Reibschalen resultieren bzw. eingestellt werden können. Der voranstehend genannte seitliche Versatz Δ der Drehachse I von zumindest der Mittelachse 51 der antriebsseitigen Reibschale 31 bewirkt bei einem Anpressen der Reibräder gegen die Reibschalen, dass eine Lauffläche eines jeweiligen Reibrades nur an einer Stelle einen Rollkontakt mit einer entsprechenden Reibschale hat. Dadurch können nachteilige Schleifkontakte oder dergleichen an anderen Stellen der Lauffläche verhindert werden, die ansonsten zu einem übermäßigen Verschleiß der Reibräder und/oder zu einem verminderten Wirkungsgrad des Getriebes 1 führen würden.

Analog zu einem Überdruckzustand lässt sich ein jeweiliger Druckraum 54a, 54b auch in einen Unterdruckzustand versetzen, wobei der Druckraum mittels einer Vakuumierung besaugt wird. Infolge des Unterdruckzustands wird der Aufnahmeringkörper 51 in das Küken 40 hinein zurückgezogen, so dass sich dadurch der Abstand eines entsprechenden Reibrades zu dem Küken 40 verringert, bzw. sich der Abstand zu einer entsprechenden Reibschale 30, 31 vergrößert. Die Verstellung der jeweiligen Reibräder 41, 42 lässt sich unabhängig voneinander durchführen. Dies bedeutet, dass die beiden Reibräder 41, 42 unabhängig voneinander entweder durch einen Überdruckzustand in einem Druckraum 54a, 54b gegen eine entsprechende Reibschale gedrückt sind, oder aber durch einen Unterdruckzustand in einem Druckraum 54a, 54b in einen Freilauf gebracht ist, in dem sie keinen Kontakt zu einer entsprechenden Reibschale haben.

Eine Veränderung des Druckes in den Druckräumen 54a, 54b bewirkt eine Verschiebung eines entsprechenden Aufnahmeringkörpers 51 relativ zu der Reibradmitteleinrichtung 40 parallel zu der Drehachse II der Reibräder und damit eine Verstellung des Abstandes der Reibräder 41, 42 zu der Reibradmitteleinrichtung 40. Falls die Druckräume 54a, 54b in einen Überdruckzustand versetzt werden, wobei ein Hydrauliköl mit einem hohen Druck in die Druckräume 54 geleitet wird, werden die Aufnahmeringkörper 51 entlang der Drehachse II von dem Küken 40 weg nach außen verschoben, so dass dadurch der Abstand der Reibräder 41, 42 zu dem Küken 40 vergrößert wird. Hierdurch werden die Reibräder gegen eine entsprechende Reibschale gedrückt, was einen gewünschten Kraft- und ggf. einen Formfluß zwischen den Reibrädern und den Reibschalen sicherstellt. Analog dazu lassen sich die Druckräume auch in einen Unterdruckzustand versetzen, z.B. mittels einer geeigneten Vakuumierung, so dass die Aufnahmeringkörper 51 in Richtung der Reibradmitteleinrichtung nach innen verschoben werden, so dass sich dadurch ein Abstand der Reibräder 41, 42 zu dem Küken 40 verringert. Entsprechend werden die Reibräder von den jeweiligen Reibschalen abgesetzt und dadurch in einen Freilauf gebracht. Die Verstellung des Abstandes der Reibräder zu dem Küken kann entweder für beide Reibräder gleichzeitig oder aber alternativ dazu nur gezielt für eines der beiden Reibräder erfolgen.

Jedes der beiden Reibräder 41, 42 weist an einer dem jeweils anderen Reibrad zugewandten Seite ein Wellenelement 55 auf, welche Wellenelemente in einem Mittenbereich 56 der Reibradmitteleinrichtung 40 hineinragen und miteinander radial gekoppelt sind. Diese radiale Kopplung ist wie in Figur 1 gezeigt, durch eine Kronenkopfverbindung erzielt. Hierbei sind in einem der beiden Wellenelemente ein sog. Kronenkopf und in dem jeweils anderen der Wellenelemente an den Kronenkopf angepasst entsprechende Ausnehmungen bzw. Vertiefungen ausgebildet. Alternativ zu den hier gezeigten Kronenkopfverbindung lässt sich die radiale Kopplung der beiden Wellenelemente bzw. der beiden Reibräder miteinander in gleicher Weise auch durch eine Nut-Feder-Verbindung, eine Zapfwellenverbindung oder dergleichen erzielen.

Die voranstehend genannte radiale Kopplung der beiden Reibräder miteinander durch die Kronenkopfverbindung ermöglicht vorteilhaft, dass die Reibräder in ihrem Abstand zu der Reibradmitteleinrichtung 40 entlang ihrer Drehachse II verstellt werden können, ohne dass dabei die Übertragung einer Drehbewegung von einem Reibrad auf das jeweils andere Reibrad aufgrund der radialen Kopplung beeinträchtigt wird. Für eine sichere Betriebsweise des Getriebes 1 ist dabei lediglich sicherzustellen, dass die Bauelemente, die die radiale Kopplung herbeiführen, wie z.B. Nut und Feder der genannten Nut-Feder-Verbindung, ausreichend lang dimensioniert sind, so dass diese Elemente bei einer Vergrößerung des Abstandes der Reibräder zueinander bzw. zu dem Küken nicht außer Eingriff geraten.

In einem Körper der jeweiligen Aufnahmeringkörper 51 sind angrenzend zu der Stirnseite, die der Axial-Radial-Lagereinrichtung 52 entgegengesetzt ist, eine O-Ringdichtung 57 eingefasst, die ein Austreten eines Fluides aus dem Druckraum 54a, 54b in Richtung des Axial-Radial-Lagers 52 wirkungsvoll verhindert. Die O-Ringdichtung 57 verhindert in gleicher Weise ein Hineinsaugen von Luft oder dergleichen in den Druckraum, wenn davon Unterdruckzustand angelegt wird.

Die Drehachse I des Kükens 40 verläuft orthogonal zu einer Ebene, in der die Mittelachsen in der Reibschalen 30, 31 verlaufen. Wesentlich hierbei ist, dass die Drehachse I von zumindest der Mittelachse 51 der antriebsseitigen Reibschale 31 seitlich versetzt ist. Dieser seitliche Versatz 1 trägt entscheidend für eine sichere Funktionsweise des Getriebes 1 bei.

Nachstehend ist unter Bezugnahme auf die Figur 5 im einzelnen erläutert, wie sich eine Verstellung des Kükens 40 um die Drehachse I vollziehen lässt, um das Übersetzungsverhältnis des Getriebes 1 wie gewünscht zu verändern.

Figur 5 zeigt einen Längsschnitt des Getriebes 1 entlang der Linie A-A von Figur 1. Der Lagerungsflansch 7 ist zwischen dem oberen Gehäuseteil 3 und dem unteren Gehäuseteil 4 aufgenommen und erstreckt sich über eine Breite des Getriebes 1, d.h. in der hier gezeigten Ausführungsform senkrecht zu den Mittelachsen 50, 51 der beiden Reibschalen 30, 31. Der Lagerungsflansch 7 kann die Form einer kreisrunden Platte aufweisen. In einem mittigen Bereich des Lagerungsflansches 7 ist eine (nicht gezeigte) Ausnehmung ausgebildet, die an die Außenabmessungen des Kükens 40 angepasst ist. Somit kann das Küken 40 in der Ausnehmung des Lagerungsflansches 7 aufgenommen sein.

In dem Lagerungsflansch in Form der Platte 7 sind des weiteren Innenbohrungen ausgebildet, die sich von beiden Seiten der Ausnehmung radial zu einem Rand des Lagerungsflansches 7 erstrecken. An einem Gehäusekörper des Kükens 40 sind an entgegengesetzten Seiten davon jeweils Stangen 74 befestigt, die in den jeweiligen Innenbohrungen aufgenommen sind. Sowohl die Innenbohrungen als auch die Stange 74 weisen einen kreisförmigen Querschnitt auf. Hierbei ist ein Außendurchmesser der Stangen 74 geeignet auf den Innendurchmesser der Innenbohrungen abgestimmt, so dass in Verbindung mit einer geeigneten Schmierung der Stangen 74 innerhalb der Innenbohrungen eine reibungsarme Verdrehbarkeit der Stangen 74 sichergestellt ist. Das Küken 40 ist somit mittels der Stangen 74 verdrehbar innerhalb des Lagerungsflansches 7 gelagert.

Alternativ zu dem Lagerungsflansch 7 kann das Küken 40 innerhalb des Kugelhohlraumes zwischen den beiden Reibschalen 30, 31 auch durch zwei Stege gelagert aufgenommen sein, die sich jeweils seitlich in den Kugelhohlraum hinein erstrekken und als Aufnahmeführung für das Küken 40 dienen. Diese Stege können bspw. an einer Innenwandung des Getriebegehäuses angebracht oder angeformt sein.

Zum Verstellen der Positionierung des Kükens 40 innerhalb des Hohlraums zwischen den beiden Reibschalen 30, 31 ist eine der beiden Stangen 74 entsprechend lang ausgebildet, so dass sie seitlich aus dem Gehäuse 2 des Getriebes 1 herausführt. An einem freien Ende 75 der Stange 74 ist ein Hebel 76 oder dergleichen befestigt, durch den die Stange 74 verdreht und damit die Positionierung des Kükens 40 verstellt werden kann. Zusätzlich kann das freie Ende 75 der Stange 74 durch einen Steg 77 abgestützt werden, um ggf. auftretende Kräfte und Momente in das Getriebegehäuse einzuleiten und dadurch ein klemmfreies Verdrehen der Stange 74 sicherzustellen. In dem Bereich, bei dem die Stange 74 seitlich aus dem Gehäuse 2 herausführt, weist die entsprechende Innenbohrung des Lagerungsflansches 7 einen Absatz auf, in dem eine Axial-/Radiallagereinrichtung 77 zum reibungsarmen Abstützen der Stange 74 eingepasst ist. Der Hebel 76 ist mit (nicht gezeigten) weiteren geeigneten Mitteln gekoppelt, so dass sich der Hebel 76 und damit die Stange 74 in Abhängigkeit des gewünschten Übersetzungsverhältnisses des Getriebes 1 entsprechend verdrehen lässt.

Innerhalb der Stange 74 ist ein sogenannter Drehrohrverteiler 81 ausgebildet, der im einzelnen einen Durchgangskanal 84 und einen Durchgangskanal 85 umfasst. Die Durchgangskanäle 84, 85 münden an einer Seite jeweils in den Druckraum 54a bzw. 54b. An dem jeweils anderen Ende münden die Durchgangskanäle 84, 85 an entsprechenden Anschlüssen 82, 83. Diese Anschlüsse 82, 83 stehen mit einer (nicht gezeigten) externen Versorgungseinrichtung in Verbindung. Die externe Versorgungseinrichtung kann ein Hydrauliköl mit einem Überdruck bereitstellen, so dass das Hydrauliköl durch die Durchgangskanäle 84, 85 in die entsprechenden Druckräume 54a, 54b geleitet wird. Ein Austreten des Hydrauliköl aus den Druckräumen 54a, 54b ist durch U-Ringdichtungen 57 verhindert, die in einer Gleitfläche der Aufnahmeringkörper relativ zu dem Küken 40 eingefasst sind. Falls die Druckräume 54a, 54b wie voranstehend erläutert, in einen Überdruckzustand gebracht sind, werden die Aufnahmeringkörper 51 nach außen gedrückt, was die Reibräder 41, 42 in Kontakt mit den jeweiligen Reibschalen bringt. In Umkehrung hierzu kann durch die externe Versorgungseinrichtung in den Druckräumen 54a, 54b auch ein Unterdruck erzeugt werden, was die Aufnahmeringkörper 51 in den Mittenbereich 56 des Kükens 40 hineinverschiebt. Hierdurch werden die Reibräder in ihren Freilauf versetzt.

Alternativ zu dem Drehrohrverteiler 81 können die Druckräume 54a, 54b auch mit der externen Versorgungseinrichtung auch über flexible Schläuche oder dergleichen in Verbindung stehen, da das Küken 40 um die Drehachse I um maximal 180° verdreht wird.

In Abwandlung zu der Ausführungsform von Figur 5 kann das Getriebe 1 anstatt mit einer Stange zum Verstellen des Kükens 40 an der Außenseite der Reibschalen mit sogenannten Magnetfeld-Wicklungen versehen sein. Zweckmäßigerweise sind hierzu die beiden Reibschalen 30, 31 an ihrer Außenseite mit einer (nicht gezeigten) Hohlkammer versehen, in denen die Magnetfeld-Wicklungen jeweils aufgenommen sind. Durch die Magnetfeld-Wicklungen wird ein sogenanntes Ring-Magnetfeld erzeugt, was in Wechselwirkung mit dem Küken 40 tritt. Durch die gezielte Ansteuerung einer jeweiligen Magnetfeld-Wicklung lässt sich somit ein gezieltes Verdrehen des Kükens 40 um die Drehachse I und damit eine Veränderung des Übersetzungsverhältnisses erzielen. In diesem Falle kann auf eine Herausführung der mechanisch-elektrisch betätigten Stange 74 aus dem Gehäuse 2 nach außen verzichtet werden.

Zur Energieversorgung kann eine elektrische Kabelverbindung vorgesehen sein, die durch eine jeweils in der Antriebswelle 21 als auch in der Abtriebswelle 20 ausgebildete axiale Durchgangsbohrung hindurch geführt ist. An der jeweiligen Stirnseite der Durchgangsbohrung, welche Stirnseiten der konvexen Außenseite der Reibschalen 30, 31 gegenüberliegt, ist die Kabelverbindung jeweils in Richtung der Reibschalen 30, 31 geführt und dort mittels einer geeigneten Verbindung, wie z.B. ein Stecker oder dergleichen an einen Kabelbaum angeschlossen, der zu den einzelnen Magnetfeld-Wicklungen führt.

Am entgegengesetzten Ende der Abtriebswelle 20 bzw. der Antriebswelle 21 kann die Kabelverbindung über einen herkömmlichen Wellenschleifkontakt an einen elektrischen Drehverteiler angeschlossen sein. Somit ist für die Kabelverbindung bzw. die Magnetfeld-Wicklungen eine elektrische Stromzufuhr in bekannter Weise von außen sichergestellt.

Das Getriebegehäuse 2 ist vorzugsweise mit einem (nicht gezeigten) geeigneten Schmiermittel gefüllt, so dass das Getriebe 1 mit einer Ölschmierung betrieben wird. Das Schmiermittel füllt den abtriebsseitigen Hohlraum 12 als auch den antriebsseitigen Hohlraum 13 vollständig aus, so dass die beiden Reibschalen 30, 31 und das Küken 40 vollständig in das Schmiermittel eingetaucht sind. Dies gewährleistet eine reibungsarme Lagerung bzw. Verdrehbarkeit der jeweiligen beweglichen Bauelemente, die innerhalb des Getriebegehäuses angeordnet sind.

Nachfolgend ist im einzelnen die Funktionsweise des erfindungsgemäßen Getriebes ausführlich erläutert.

Die Funktionsweise des Getriebes 1 beruht bei einem eingestellten Vorwärtsgang, d.h. bei gleicher Drehrichtung der Abtriebswelle 20 in bezug zu der Drehrichtung der Antriebswelle 21, darauf, dass bei einer Drehung der Antriebswelle 21 infolge der radialen Kopplung zwischen der Antriebswelle 21 und der unteren Reibschale 31 letztgenannte ebenfalls in eine Drehbewegung versetzt wird. Infolge der sich einstellenden Drehbewegung der unteren Reibschale 31 rollt das antriebsseitige Reibrad 42 an der konkaven Fläche 37 der unteren Reibschale 31 ab. Durch die radiale Kopplung der beiden Reibräder 41, 42 mittels der Kronenkopfverbindung wird die Drehbewegung des antriebsseitigen Reibrades 42 an das abtriebsseitige Reibrad 41 übertragen, welches wiederum an der konkaven Fläche 37 der oberen Reibschale 30 abrollt und dadurch die obere Reibschale 30 in eine Drehbewegung versetzt. Durch die drehfeste Verbindung der oberen Reibschale 30 mit der Abtriebswelle 20 wird somit letztlich auch die Abtriebswelle 20 in eine gleichsinnige Drehbewegung wie die Antriebswelle versetzt, so dass im Ergebnis ein gleichsinniger Kraftfluss innerhalb des Getriebes 1 von der Abtriebswelle 21 über die beiden Reibschalen 30, 31 und die beiden Reibräder 41, 42 an die Abtriebswelle 20 sichergestellt ist.

Bei der in Figur 1 gezeigten Stellung der Reibradmitteleinrichtung 40 entspricht die Drehrichtung der Abtriebswelle 20 der Drehrichtung der Antriebswelle 21. Falls das Getriebe 1 bei einem Kraftfahrzeug eingesetzt wird, ist eine übereinstimmende Drehrichtung von Abtriebswelle und Antriebswelle z.B. für einen Vorwärtsgang zweckmäßig. Die übereinstimmende Drehrichtung von Abtriebswelle 20 zu Antriebswelle 21 resultiert hinsichtlich der Anordnung der Reibräder 41, 42 daraus, dass in der in Figur 1 gezeigten Stellung der Reibradmitteleinrichtung 40 beide Reibräder 41, 42 auf der gleichen Seite einer Ebene, in der die Mittelachse 52 zumindest der antriebsseitigen Reibschale 31 liegt und die im wesentlichen parallel zu der Drehachse I des Kükens ist, mit der Reibschale 31 auf der Antriebsseite und der Reibschale 30 auf der Abtriebsseite in Anlagekontakt gebracht sind bzw. darauf abrollen. In dieser Position der Reibräder sind ihre Drehachsen im wesentlichen parallel zu der Drehachse der Antriebswelle bzw. der Abtriebswelle, oder aber schließen damit einen spitzen Winkel ein.

Zur Steigerung von übertragbaren Momenten des Getriebes 1 können sowohl die konkaven Fläche 37 der beiden Reibschalen 30, 31 als auch die Laufflächen der beiden Reibräder 41, 42 mit einer Oberflächenstrukturierung versehen sein, was neben dem Kraftschluss zwischen den aufeinander abrollenden Flächen des weiteren zu einem Formschluss führt. Die konkaven Fläche 37 der oberen Reibschale 30 und der unteren Reibschale 31 können bspw. sand- und/oder glasperlengestrahlt sein, wodurch sich eine aufgerauhte Oberflächenstrukturierung ergibt. In gleicher Weise kann auch die Lauffläche der jeweiligen Reibräder 41, 42 aufgerauht sein, so dass sich im Zusammenwirken mit der sand- und/oder glasperlengestrahlten konkaven Fläche 37 der Reibschalen 30, 31 ein Formschluss einstellt, was eine Übertragung von größeren Drehmomenten möglicht macht.

Im Zusammenhang mit der voranstehend genannten Oberflächenstrukturierung können die obere Reibschale 30 und die untere Reibschale 31 an ihren jeweiligen Scheitelpunkten in der konkaven Fläche 37 keine Oberflächenstrukturierung, sondern vielmehr eine (nicht gezeigte) kleine Ausnehmung aufweisen. Die Ausnehmung soll verhindern, dass, falls die Reibräder im Bereich der Scheitelpunkte bei noch drehenden Reibschalen positioniert werden, es zu keinem übermäßigen Abrieb zwischen Reibrädern und Reibschalen kommt, da in dieser Stellung ein Abrollen der Reibräder relativ zu den Reibschalen technisch nicht möglich ist.

Die Oberflächenstrukturierung der konkaven Flächen 37 der jeweiligen Reibschalen 30, 31 kann konzentrisch in jeweils einem Bereich gleichen Durchmessers in der konkaven Fläche 37 ausgebildet sein. Solche Oberflächenstrukturierungen können in der jeweiligen konkaven Fläche 37 in mehreren Bereichen mit jeweils unterschiedlichem Durchmesser vorgesehen sein. Bspw. können die Oberflächenstrukturierungen in fünf Bereichen ausgebildet sein, ohne in dieser Anzahl eine Einschränkung zu verstehen.

Ein Bereich mit dem jeweils kleinsten Durchmesser ist hierbei durch einen sog. Nulldurchmesser D₀ definiert. Dies ist der kleinste Durchmesser für einen Bereich, an dem ein jeweiliges Reibrad in Kontakt in einer Reibschale ist und an dem ein Abrollen des Reibrades gewährleistet ist. Hierbei können die Reibschalen 30, 31 in einen Bereich, der durch einen Durchmesser kleiner als der Null-Durchmesser definiert ist, eine glatte Oberfläche oder aber eine kleine Ausnehmung aufweisen, so dass an dieser Stelle kein Kontakt zwischen einem Reibrad und einer Reibschale möglich ist.

Die voranstehend genannte Oberflächenstrukturierung in den konzentrischen Bereichen mit jeweils gleichen Durchmessern kann bspw. durch mandelförmige Vertiefungen bzw. Kelche, durch mandelförmige Noppen, durch halbkugelförmige Noppen und Kelche oder dergleichen gebildet sein, was zusätzlich zu einem Kraftschluß auch einen vorteilhaften Formschluss zwischen den aufeinander abrollenden Reibschalen und Reibrädern gewährleistet. In bezug auf die genannten Oberflächenstrukturen versteht sich, dass die jeweiligen Vertiefungen und Erhöhungen auch austauschbar sind. Anders ausgedrückt, können z.B. die mandelförmigen bzw. halbkugelförmigen Noppen in gleicher Weise anstatt in der konkaven Fläche 37 der beiden Reibschalen auch in den Laufflächen der Reibräder 41, 42 ausgebildet sein, wobei entsprechende die konkaven Flächen 37 der beiden Reibschalen 30, 31 dann mit den geeigneten Vertiefungen versehen sind.

In einer weiteren Ausführungsform des Getriebes kann die Oberflächenstrukturierung sowohl in der konkaven Fläche 37 der beiden Reibschalen 30, 31 als auch an der Lauffläche der beiden Reibräder 41, 42 als sogenannte Spitzzahnstruktur ausgebildet sein. Die Spitzzahnstruktur ist hierbei so ausgebildet, dass ihre Zähne radial in bezug auf die Reibschalen und im wesentlichen parallel zu einer Normalen bezogen auf einen Kontaktbereich der Lauffläche mit einem entsprechenden Reibrad verlaufen. Wenn ein Reibrad an der konkaven Fläche 37 der entsprechenden Reibschale abrollt, berühren sich lediglich die konischen Zahnflanken der Spitzzahnstruktur, nicht aber Zahnspitze und Zahnfuss. Durch die Spitzzahnstruktur ergibt sich eine vergrößerte Kontaktfläche der miteinander kämmenden Flächen, so dass daraus ein erhöhter Reibschluss resultiert und entsprechend größere Drehmomente durch das Getriebe 1 übertragen werden können.

Im Zusammenhang mit dem erfindungsgemäßen Getriebe 1 ist der Begriff "Übersetzungsverhältnis" in einem übergeordneten Sinn zu verstehen, so dass darunter sowohl eine Übersetzung von langsam nach schnell als auch eine Untersetzung von schnell nach langsam fällt.

In dem in der Figur 1 gezeigten Zustand des Getriebes 1 ist ein Vorwärtsgang mit einer Untersetzung ins Langsame eingestellt. Im einzelnen wird hierbei eine hohe Drehzahl der Antriebswelle in eine gleichsinnige kleine Drehzahl der Abtriebswelle umgewandelt. Hierbei ist das Küken 40 so zwischen den beiden Reibschalen 30, 31 angeordnet, dass das antriebsseitige Reibrad 42 mit der entsprechend zugeordneten Reibschale 31 bei einem Durchmesser der Reibschale 31 in Kontakt kommt, der sich angrenzend an die Mittelachse der Reibschale 31 befindet und somit einen verhältnismäßig kleinen Wert annimmt. Da an dieser Stelle die Umfangsgeschwindigkeit der unteren Reibschale 31 klein ist, ist somit auch die Umfangsgeschwindigkeit des an der unteren Reibschale 31 abrollenden Reibrades 42 klein. Demgegenüber sind die Betriebsbedingungen bei dem abtriebsseitigen Reibrad 41 umgekehrt. Bei der in Figur 1 dargestellten Position des Kükens 40 ist das abtriebsseitige Reibrad 41 mit der entsprechend zugeordneten oberen Reibschale 30 bei einem Durchmesser der Reibschale in Kontakt, bei dem die konkave Fläche 37 der oberen Reibschale 30 einen nahezu maximalen Abstand von der Mittelachse 50 der abtriebsseitigen Reibschale 30 aufweist. Aufgrund der voranstehend erläuterten radialen Kopplung stimmt die Drehzahl von abtriebsseitigem Reibrad 41 mit der Drehzahl des antriebsseitigen Reibrads 42 überein. Dies bewirkt, dass die Drehzahl der Abtriebswelle 20 kleiner wird als die Drehzahl der Antriebswelle 21 (Untersetzung ins Langsame), da der Umfang der oberen Reibschale 30 an der Stelle, an der sie mit dem abtriebsseitigen Reibrad 41 in Kontakt kommt, größer ist als der Umfang der unteren Reibschale 31 an der Stelle, an der sie mit dem antriebsseitigen Reibrad 42 in Kontakt kommt.

Eine Verdrehung des Kükens 40 zum Beispiel im Gegenuhrzeigersinn bewirkt, dass das antriebsseitige Reibrad 42 mit der entsprechend zugeordneten Reibschale 31 bei einem Durchmesser der Reibschale in Kontakt kommt, der im Vergleich zur vorherigen Stellung des Kükens vergrößert ist. Da an dieser Stelle die Umfangsgeschwindigkeit der unteren Reibschale 31 größer ist, ist auch die Umfangsgeschwindigkeit des an der unteren Reibschale 31 abrollenden Reibrades 42 größer. Aufgrund der radialen Kopplung der beiden Reibräder 41, 42 mittels der Kronenkopfverbindung 61 oder dergleichen ist bei der nunmehr geänderten Position des Kükens 40 auch die Umfangsgeschwindigkeit des abtriebsseitigen Reibrades 41 größer. Dieser Zustand ist in der Figur 2 gezeigt, wobei ausgehend von dem in der Figur 1 gezeigten Zustand das Küken 40 um die Drehachse 1 im Gegenuhrzeigersinn gedreht ist.

Bei der in Figur 2 gezeigten Winkelstellung des Kükens 40 erfolgt eine Übersetzung ins Schnelle. Dies ist dadurch begründet, dass das antriebsseitige Reibrad 42 an der unteren Reibschale 31 in einem Bereich mit einem größtmöglichen Durchmesser Dₘₐₓ abrollt und entsprechend eine große Umfangsgeschwindigkeit erfährt. Gleichzeitig ist das abtriebsseitige Reibrad 41 mit der oberen Reibschale 30 in einem Bereich mit einem Nulldurchmesser D₀ in Kontakt, so dass die große Umfangsgeschwindigkeit bzw. Drehzahl des antriebsseitigen Reibrades 42 über das abtriebsseitige Reibrad 41 mit der gleichen Drehzahl an die obere Reibschale 30 und damit an die Abtriebswelle 20 übertragen wird. Infolgedessen wird durch das Abrollen des abtriebsseitigen Reibrades 41 an der abtriebsseitigen oberen Reibschale 30 eine Übersetzung ins Schnelle erzielt.

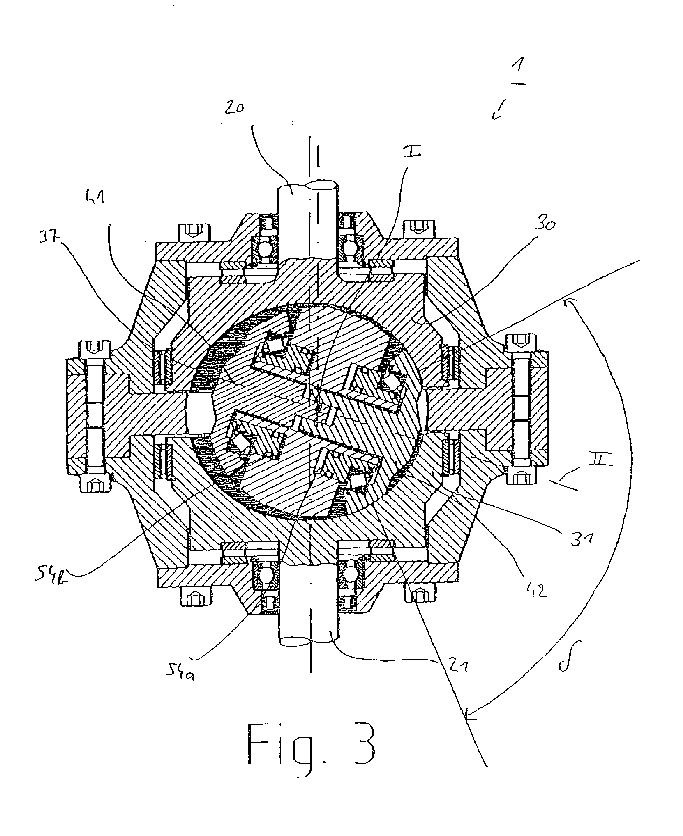

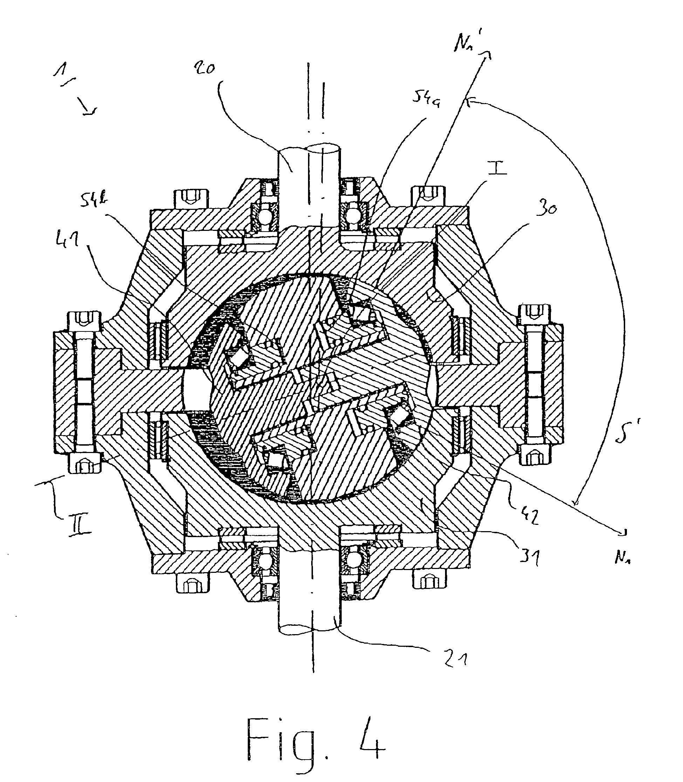

In den Figuren 3 und 4 ist das Getriebe 1 mit einem eingelegten Rückwärtsgang gezeigt, wobei es zu einer Drehrichtungsumkehr der Abtriebswelle 20 in bezug zu der Antriebswelle 21 kommt. Zur Einlegung des Rückwärtsganges wird das Küken 40 um die Drehachse I so weit verdreht, dass die Lauffläche des antriebsseitigen Reibrades 42 in Gegenüberstellung mit sowohl der antriebsseitigen Reibschale 31 als auch der abtriebsseitigen Reibschale 30 kommt.

In dieser Position befindet sich das Reibrad 42 auf der gleichen Seite der Ebene, in der die Mittelachse zumindest der antriebsseitigen Reibschale liegt und die im wesentlichen parallel zu der Drehachse I des Kükens 40 ist, wobei die Drehachse II des Reibrades 42 im wesentlichen orthogonal zu der Drehachse der Antriebswelle bzw. der Abtriebswelle ist. In einer Extremstellung des Kükens 40 kann die Drehachse II des Reibrades 42 mit einer Orthogonalen zu der Drehachse der Antriebswelle bzw. der Abtriebswelle ggf. auch einen spitzen Winkel einschließen.

Für eine Verstellung des Reibrades 42 wird der Druckraum 54a angrenzend an den Aufnahmeringkörper 51, an dem das Reibrad 42 gelagert ist, in einen Überdruckzustand versetzt, so dass das Reibrad 42 gegen die beiden Reibschalen 30, 31 gepresst wird. Der Versatz Δ der Drehachse I ist in bezug zu der Mittelachse 51 der antriebsseitigen Reibschale 31 insofern vorteilhaft, als die Lauffläche des antriebsseitigen Reibrades 42 gegen die beiden Reibschalen 30, 31 gepresst wird. Demgegenüber wird der Druckraum 54b angrenzend an den Aufnahmeringkörper 51, an dem das abtriebsseitige Reibrad 41 gelagert ist, besaugt bzw. in einen Unterdruckzustand versetzt, so dass infolgedessen das Reibrad 41 keinen Kontakt zu den Reibschalen 30, 31 mehr hat. Anders ausgedrückt, wird durch einen Überdruckzustand in dem Druckraum 54a ein Anpressdruck für das Reibrad 42 an die beiden Reibschalen 30, 31 erzielt, während der andere Druckraum 54b für das Reibrad 41 in einen Unterdruckzustand versetzt wird, so dass das Reibrad 41 einen geringstmöglichen Abstand zu dem Küken 40 einnimmt und nicht mit einer der Reibschalen in Kontakt gelangt. In diesem Fall, dargestellt in den Figuren 3 und 4, wird das Reibrad 42 den Drehsinn der antriebsseitigen Reibschale 31 automatisch in eine gegensinnige Drehung der abtriebsseitigen Reibschale 30 umwandeln. Für die Rückwärtsgangstellung besteht die Möglichkeit, das gesamte Drehzahlverhältnis wie für die Vorwärtsgangstellung zu nutzen.

In dem Betriebszustand von Figur 3 erfolgt analog zu der Darstellung in Figur 1 eine Untersetzung von Schnell nach Langsam. Des weiteren erfolgt in dem in der Figur 4 gezeigten Betriebszustand eine Übersetzung von Langsam ins Schnelle. Das Funktionsprinzip des Rückwärtsganges in den Figuren 3 und 4 hinsichtlich der Veränderungen des Übersetzungsverhältnisses stimmt mutatis mutandis mit dem Funktionsprinzip des in den Figuren 1 und 2 gezeigten Vorwärtsganges überein und wird deshalb zur Vermeidung von Wiederholungen nicht nochmals im Detail erläutert.

Die in den Figuren 1 bis 4 gezeigte Ausführungsform ermöglicht im allgemeinen ein stufenloses Verstellen des Kükens 40, da die beiden Reibräder 41, 42 an beliebigen Stellen der konkaven Fläche 37 der beiden Reibschalen 30, 31 abrollen können. Vorteilhaft bei diesen Ausführungsformen ist des weiteren, dass ein sogenanntes Schalten unter Last möglich ist, wobei während eines Anliegens des Reibrades oder der beiden Reibräder an den jeweiligen Reibschalen eine Veränderung der Winkelstellung des Kükens 40 wie voranstehend erläutert erzwungen werden kann, so dass ein stetiger Kraftfluss erzielt wird.

Die Veränderung des Abstands der beiden Reibräder zueinander lässt sich mittels der voranstehend unter Bezugnahme auf Figur 1 erläuterten hydraulischen Verstelleinrichtung in Form der Druckräume 54a, 54b zwischen den jeweiligen Aufnahmeringkörper 51 und der mittleren Trennwand 53 des Kükens 40 realisieren. Falls die Druckräume 54a, 54b in einen Überdruckzustand versetzt werden, so werden das antriebsseitige Reibrad 42 bzw. das abtriebsseitige Reibrad 41 gegen eine jeweilige Reibschale gepresst, was ein im wesentlichen schlupffreies Abrollen der Reibräder an den Reibschalen zur Folge hat. Die gegenüberliegende Anordnung der beiden Reibräder in dem Küken 40 hat dabei den wesentlichen Vorteil, dass die durch das Anpressen der Reibräder hervorgerufenen Kräfte gleichmäßig in das Getriebegehäuse abgeleitet werden können.

Durch einen Unterdruckzustand in den Druckräumen 54a, 54b, was z.B. durch ein "Besaugen" bzw. durch ein Vakuumieren derselben erfolgen kann, lassen sich die Aufnahmeringkörper 51 in den Mittenbereich 56 des Kükens 40 hineinverschieben, wodurch die Reibräder 41, 42 außer Kontakt mit den Reibschalen geraten. Zur Unterstützung einer solcher Verschiebung können die jeweiligen Aufnahmeringkörper 51 durch eine (nicht gezeigte) Federeinrichtung in Richtung des Mittenbereichs 56 des Kükens 40 vorgespannt sein. Nimmt der Druck des Fluids in dem jeweiligen Druckraum ab, so werden die Aufnahmeringkörper und damit die Reibräder aufgrund der Federvorspannung jeweils nach innen bewegt, so dass sich ein Spalt zwischen den Reibrädern und den Reibschalen einstellt. In diesem Zustand ist also ein Kontakt zwischen den Reibrädern und der konkaven Fläche der jeweiligen Reibschale aufgehoben, so dass eine Verdrehung des Kükens 40 um die Drehachse I hin zu einem benachbarten Kämmbereich ohne weiteres möglich ist. Hiernach wird der Druck innerhalb eines jeweiligen Druckraums wieder erhöht, so dass die Aufnahmeringkörper und damit die darauf gelagerten Reibräder 41, 42 in Richtung der Reibschalen 30, 31 gedrückt werden und ein Anpressdruck der konkaven Fläche 37 auf die beiden Reibräder erhöht wird. Dieser Vorgang des Absetzens der Reibräder und ihres anschließenden Wiederanpressens an die Reibschalen lässt sich binnen von Millisekunden mit einer geeigneten Steuerung der hydraulischen Verstelleinrichtung in Verbindung mit einer gezielten Verstellung des Kükens 40 erzielen. Somit lassen sich bei dem Getriebe 1 Kupplungseffekte bzw. ein "Gangwechsel", d.h. eine Veränderung des Über- bzw. Untersetzungsverhältnisses erzielen.

Im allgemeinen besteht ein Vorteil der erläuterten Verstellbarkeit der Reibräder 41, 42 darin, dass aufgrund eines günstigen Winkels lediglich eine im Vergleich zu einer prinzipiell auch möglichen axialen Verschiebung der Reibschalen relativ kurze Verschiebung entlang der Drehachse II erforderlich ist, um die Reibräder zum Auskuppeln von den Reibschalen abzusetzen. Da des weiteren bei einer Verstellung der Reibräder bzw. der Aufnahmeringkörper nur vergleichsweise geringe Fluidmengen beteiligt sind, ist eine entsprechend kurze Steuerzeit für eine schnelle Verschiebung der Reibräder entlang ihrer Drehachse möglich.

Die Lauffläche, die in einem Außenumfang eines jeweiligen Reibrades vorgesehen ist, weist bezogen auf die Mitte ihres Kontaktbereiches mit einer entsprechenden Reibschale einen Durchmesser auf, der im wesentlichen zumindest größer als der Radius der Reibschale ist. Des weiteren sind die Laufflächen der Reibräder derart beschaffen, dass die Flächennormalen N₁ und N₂ jeweils bezogen auf die Mitte des Kontaktbereiches eines Reibrades mit einer entsprechenden Reibschale miteinander einen Winkel von im wesentlichen 90° einschließen. Hieraus resultiert ein großer Verstellbereich für das Übersetzungsverhältnis des Getriebes 1. Der Winkel zwischen den Flächennormalen N₁ und N₂ ist in der Figur 2 mit δ bezeichnet.

Falls bei dem Getriebe 1 der Rückwärtsgang eingestellt ist, treffen die voranstehend gemachten Feststellungen in bezug auf die Flächennormalen in gleicher Weise zu. In der Figur 4 ist dies durch die Flächennormalen N₁ und N₁, dargestellt, die sich auf die Lauffläche eines einzigen Reibrades beziehen, vorliegend auf das Reibrad 42. In diesem Fall ist zwischen den Flächennormalen N₁ und N₁, der Winkel δ' eingeschlossen. Falls bei dem Getriebe 1 der Rückwärtsgang eingestellt ist, ist lediglich das antriebsseitige Reibrad 42 mit den beiden Reibschalen 30, 31 in Kontakt, wohingegen das abtriebsseitige Reibrad 41 einen kleinsten Abstand zu der Reibradmitteleinrichtung annimmt und dadurch in einen Freilauf versetzt ist, d.h. keinen Kontakt zu den Reibschalen hat.

Es versteht sich, dass die Laufflächen der Reibräder 30, 31 in Ergänzung und/oder alternativ zu der genannten konischen Balligkeit auch mit der voranstehend erläuterten Oberflächenstrukturierung versehen sein können, z.B. in Form einer sand-/glasgestrahlten Fläche, in Form von halbkugelförmigen oder mandelförmigen Noppen und entsprechenden Vertiefungen oder in Form einer geeignet ausgebildeten Spitzzahnstruktur.

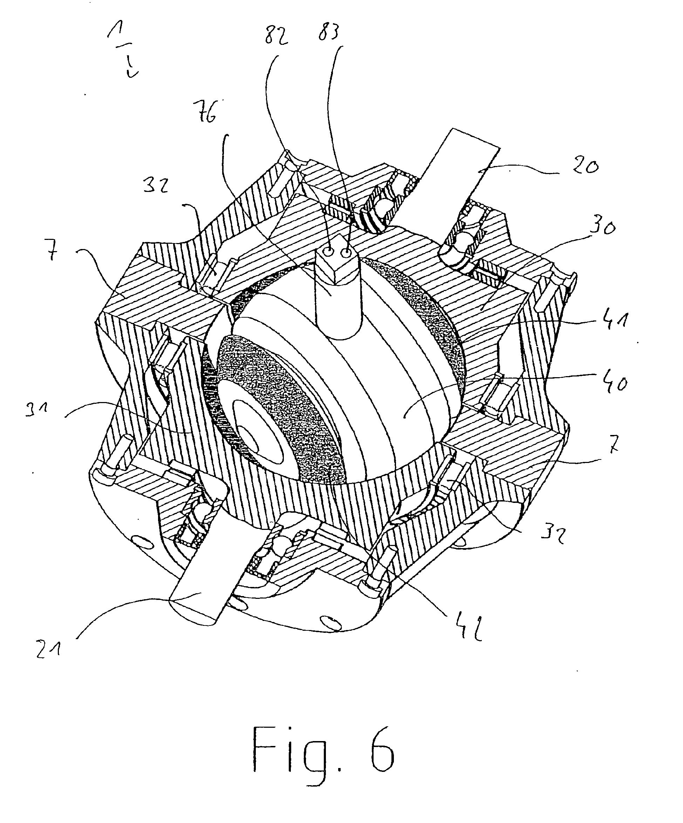

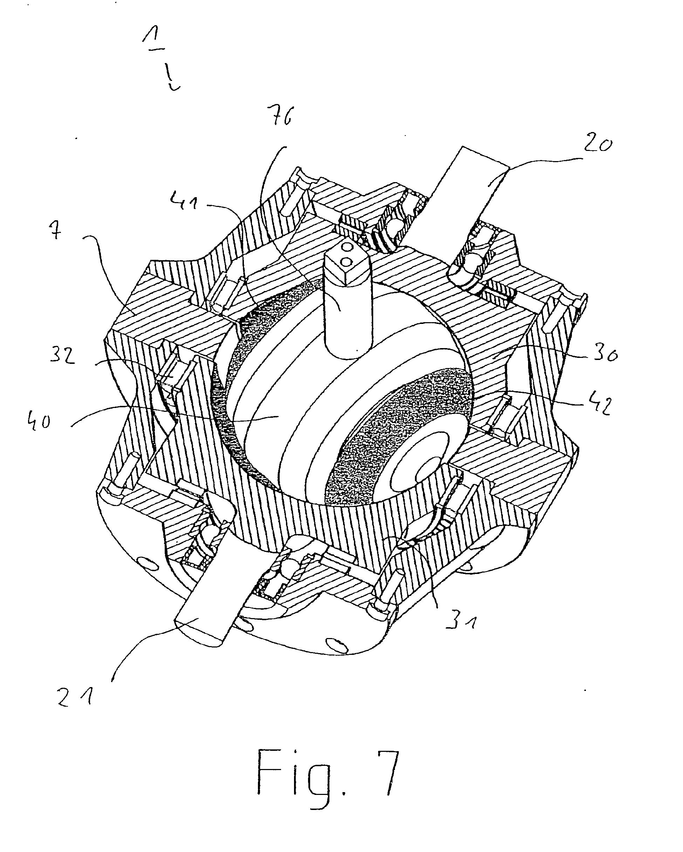

In den Figuren 6 und 7 ist das Getriebe in einer teilweise freigelegten perspektivischen Schnittansicht gezeigt. Der in Figur 6 gezeigte Betriebszustand des Getriebes entspricht hierbei dem Betriebszustand von Figur 1, wobei bei eingestelltem Vorwärtsgang eine Untersetzung ins Langsame erzielt wird, die Drehrichtung der Abtriebswelle 20 stimmt hierbei mit der Drehrichtung der Antriebswelle 21 überein. Des weiteren entspricht der Betriebszustand von Figur 7 dem Betriebszustand von Figur 3, wobei eine Untersetzung ins Langsame erzielt wird. Hierbei dreht die Abtriebswelle 20 entgegengesetzt zu der Antriebswelle 21. Zur Vermeidung von Widerholungen wird in diesem Zusammenhang auf die entsprechenden Erläuterungen der Figuren 1 und 3 verwiesen.

Allen der voranstehend genannten Ausführungsformen des Getriebes 1 ist gemeinsam, dass durch die Wahl einer kugeligen Grundform für die Reibschalen 30, 31 eine Innenkrümmung der reibenden bzw. kämmenden Innenflächen derselben und somit eine Annäherung an die kreisrunde Form der Reibräder 41, 42 realisierbar ist. Hierdurch stellt sich ein wesentlich verbesserter Kraftfluss ein, selbst dann, wenn von einer ausgeprägten Oberflächenstrukturierung der miteinander reibenden bzw. kämmenden Oberflächen abgesehen wird. Somit können durch das Getriebe 1 vorteilhaft größere Drehmomente übertragen werden. Des weiteren gestattet das Getriebe 1 bei einem sehr kompakten Aufbau eine Drehrichtungsumkehr zwischen Antriebswelle und Abtriebswelle d.h. ein Umschalten zwischen Vorwärts- und Rückwärtsgang, wobei bei eingestelltem Rückwärtsgang der gleiche Drehzahlbereich wie bei dem Vorwärtsgang zur Verfügung steht. Somit ist in das erfindungsgemäße Getriebe ein sog. Rückwärtsgang vollständig integriert, der sich allein durch die voranstehend erläuterte Verdrehung des Kükens 40 um die Drehachse I bei gleichzeitig geeigneter Verschiebung der Reibräder 41, 42 entlang der Achse II einstellen lässt. Zusammenfassend zeichnet sich das erfindungsgemäße Getriebe I durch eine insgesamt geringe Teileanzahl, eine kostengünstige und einfache Herstellung und Montage, eine lange Lebensdauer, eine Wartungsfreundlichkeit und durch einen kompakten Aufbau aus.

## Patentansprüche

1. Verstellbares Getriebe (1), mit
- einer Antriebswelle (21) und einer Abtriebswelle (20),
- einem Paar Reibschalen (30, 31), die sich mit ihren konkaven Flächen (37) einander gegenüberliegen, wobei die Reibschalen (30, 31) um ihre jeweilige Mittelachse (50, 51) drehbar angeordnet und jeweils mit der Antriebswelle (21) und der Abtriebswelle (20) zumindest radial gekoppelt sind, und mit
- einer zwischen den Reibschalen (30, 31) um eine Drehachse (1) verstellbar angeordneten Reibradmitteleinrichtung (40), die ein Paar darin drehbar gelagerter Reibräder (41, 42) aufweist und einen Kraftfluss mit bei einer Drehung um die Drehachse (1) veränderlichem Übersetzungsverhältnis zwischen den Reibschalen gewährleistet, wobei ein Reibrad/ein jeweiliges Reibrad (41, 42) mit seiner Lauffläche mit einer entsprechenden Reibschale (30, 31) auf der Antriebsseite und auf der Abtriebsseite in Kontakt bringbar ist,
wobei die Reibräder (41, 42) in ihrem jeweiligen Abstand zu der Reibradmitteleinrichtung (40) entlang ihrer Drehachse (II) verstellbar sind, **dadurch gekennzeichnet, daß** die Reibräder in der Reibradmitteleinrichtung (40) jeweils mittels eines Aufnahmeringkörpers (51) gelagert sind, der in der Reibradmitteleinrichtung (40) im wesentlichen parallel zu der Drehachse (11) der Reibräder (41, 42) verschiebbar aufgenommen ist.

2. Getriebe (1) nach Anspruch 1, bei dem zwischen den Aufnahmeringkörpern (51) und einer mittleren Trennwand der Reibradmitteleinrichtung (40) jeweils ein Druckraum (54a, 54b) gebildet ist,
wobei eine Veränderung des Druckes in dem Druckraum (54) eine Verschiebung des Aufnahmeringkörpers (51) relativ zu der Reibradmitteleinrichtung (40) im wesentlichen parallel zu der Drehachse (11) der Reibräder (41, 42) bewirkt.

3. Getriebe (1) nach Anspruch 2, bei dem ein Fluid in den jeweiligen Druckraum (54a, 54b) von einer externen Versorgungseinrichtung eingespeist wird, wobei der Druckraum (54a, 54b) mit der externen Versorgungseinrichtung durch eine Schlauchverbindung oder durch einen an der Reibradmitteleinrichtung (40) vorgesehenen Drehrohrverteiler (81) miteinander verbunden ist.

4. Getriebe (1) nach einem der Ansprüche 1 bis 3, bei dem die Aufnahmeringkörper (51) jeweils durch eine Federeinrichtung in Richtung der Reibradmitteleinrichtung (40) vorgespannt sind.

5. Getriebe (1) nach einem der Ansprüche 1 bis 4, bei dem die Reibräder (41, 42) radial miteinander gekoppelt sind, insbesondere mittels einer Kronenkopfverbindung, einer Zapfwellenverbindung oder einer Nut-Feder-Verbindung (61).

6. Getriebe (1) nach einem der Ansprüche 1 bis 5, bei dem die an einem Außenumfang eines jeweiligen Reibrades vorgesehene Lauffläche bezogen auf die Mitte ihres Kontaktbereiches mit einer entsprechenden Reibschale einen Durchmesser im wesentlichen zumindest größer als der Radius der konkaven Fläche (37) der Reibschale aufweist.

7. Getriebe (1) nach einem der Ansprüche 1 bis 6, bei dem die Lauffläche eines jeweiligen Reibrades (41, 42) in Anpassung an die konkave Fläche (37) der Reibschalen (30, 31) eine konische Balligkeit aufweist.

8. Getriebe (1) nach einem der Ansprüche 1 bis 7, bei dem die Reibradmitteleinrichtung (40) derart zwischen den Reibschalen (30, 31) positionierbar ist, dass die Drehrichtung der Abtriebswelle (20) gegensinnig zu der Drehrichtung der Antriebswelle (21) ist, um einen Rückwärtsgang vorzusehen.

9. Getriebe (1) nach Anspruch 8, bei dem nur eines der beiden Reibräder auf der gleichen Seite einer Ebene, in der die Mittelachse zumindest der antriebsseitigen Reibschale liegt und die im wesentlichen parallel zu der Drehachse (1) der Reibradmitteleinrichtung (40) ist, mit den Reibschalen (30, 31) auf der Antriebsseite und auf der Abtriebsseite in Kontakt bringbar ist,
wobei in dieser Position des Reibrades seine Drehachse (II) im wesentlichen orthogonal zu der Drehachse der Antriebswelle und/oder der Abtriebswelle ist.

10. Getriebe (1) nach einem der Ansprüche 1 bis 9, bei dem mindestens eine der beiden Reibschalen (30, 31) mit Magnetfeld-Wicklungen zum Verstellen der Reibradmitteleinrichtung (40) um die Drehachse (I) versehen sind.

11. Getriebe (1) nach einem der Ansprüche 1 bis 10, bei dem die konkave Fläche (37) zumindest einer der beiden Reibschalen (30, 31) und/oder eine Lauffläche zumindest eines der beiden Reibräder eine Oberflächenstrukturierung aufweisen.

12. Getriebe (1) nach einem der Ansprüche 1 bis 11, bei dem auf zumindest einem der beiden Reibräder ein Radring aufgesetzt ist, mit dem das Reibrad (41, 42) an der entsprechenden Reibschale (30, 31) abrollt.

13. Getriebe (1) nach Anspruch 12, bei dem der Radring einen größeren Durchmesser als das entsprechende Reibrad (41, 42) aufweist.

14. Getriebe (1) nach einem der Ansprüche 1 bis 13, bei dem zumindest ein Reibrad mit einer Mehrzahl von Gleitelementen versehen ist, die in dem Reibrad seitlich aneinander angrenzend und senkrecht zur Umfangsrichtung der Lauffläche verschieblich gelagert sind und die Außenseite der Lauffläche bilden.

15. Getriebe (1) nach Anspruch 14, bei dem die Gleitelemente in dem Reibrad im wesentlichen in radialer Richtung des Reibrades verschieblich gelagert sind.

## Claims

1. Variable transmission (1), comprising
- a drive input shaft (21) and a drive output shaft (20),
- a pair of friction shells (30, 31) which are situated with their concave surfaces (37) opposite one another, with the friction shells (30, 31) being arranged so as to be rotatable about their respective central axes (50, 51) and being in each case at least radially coupled to the drive input shaft (21) and the drive output shaft (20), and
- a friction wheel device (40) which is arranged between the friction shells (30, 31) so as to be adjustable about a rotational axis (I), which friction wheel device (40) has a pair of friction wheels (41, 42) rotatably mounted therein and ensures a force flow between the friction shells with a transmission ratio which varies with a rotation about the rotational axis (I), with it being possible for a friction wheel/a respective friction wheel (41, 42) to be placed in contact by means of its running surface with a corresponding friction shell (30, 31) on the drive input side and on the drive output side, wherein the friction wheels (41, 42) can be adjusted along their rotational axis (II) in terms of their respective spacing to the friction wheel device (40),
**characterized in that**
the friction wheels in the friction wheel device (40) are mounted in each case by means of a holding ring body (51) which is held in the friction wheel device (40) so as to be movable substantially parallel to the rotational axis (II) of the friction wheels (41, 42).

2. Transmission (1) according to Claim 1, in which in each case a pressure space (54a, 54b) is formed between the holding ring bodies (51) and a central partition of the friction wheel device (40), with a variation in the pressure in the pressure space (54) bringing about a movement of the holding ring body (51) relative to the friction wheel device (40) substantially parallel to the rotational axis (II) of the friction wheels (41, 42).

3. Transmission (1) according to Claim 2, in which a fluid is fed into the respective pressure space (54a, 54b) from an external supply device, with the pressure space (54a, 54b) being connected to the external supply device by means of a hose connection or by means of a rotary pipe distributor (81) which is provided on the friction wheel device (40).

4. Transmission (1) according to one of Claims 1 to 3, in which the holding ring bodies (51) are preloaded in each case by means of a spring device in the direction of the friction wheel device (40).

5. Transmission (1) according to one of Claims 1 to 4, in which the friction wheels (41, 42) are coupled to one another radially, in particular by means of a crown head connection, a power take-off shaft connection or a tongue-and-groove connection (61).

6. Transmission (1) according to one of Claims 1 to 5, in which the running surface which is provided on an outer periphery of a respective friction wheel has, in relation to the centre of its region of contact with a corresponding friction shell, a diameter substantially at least greater than the radius of the concave surface (37) of the friction shell.

7. Transmission (1) according to one of Claims 1 to 6, in which the running surface of a respective friction wheel (41, 42) has a conical convexity so as to match the concave surface (37) of the friction shells (30, 31).

8. Transmission (1) according to one of Claims 1 to 7, in which the friction wheel central (40) can be positioned between the friction shells (30, 31) in such a way that the rotational direction of the drive output shaft (20) is opposite to the rotational direction of the drive input shaft (21), in order to provide a reverse gear.

9. Transmission (1) according to Claim 8, in which only one of the two friction wheels can be placed in contact, on the same side of a plane in which the central axis at least of the drive-input-side friction shell lies and which is substantially parallel to the rotational axis (I) of the friction wheel device (40), with the friction shells (30, 31) on the drive input side and on the drive output side, wherein in said position of the friction wheel, the rotational axis (II) of the latter is substantially orthogonal with respect to the rotational axis of the drive input shaft and/or of the drive output shaft.

10. Transmission (1) according to one of Claims 1 to 9, in which at least one of the two friction shells (30, 31) is provided with magnetic field windings for adjusting the friction wheel device (40) about the rotational axis (I).

11. Transmission (1) according to one of Claims 1 to 10, in which the concave surface (37) of at least one of the two friction shells (30, 31) and/or a running surface of at least one of the two friction wheels have/has surface structuring.

12. Transmission (1) according to one of Claims 1 to 11, in which a wheel ring is placed onto at least one of the two friction wheels, by means of which wheel ring the friction wheel (41, 42) rolls on the corresponding friction shell (30, 31).

13. Transmission (1) according to Claim 12, in which the wheel ring has a greater diameter than the corresponding friction wheel (41, 42).

14. Transmission (1) according to one of Claims 1 to 13, in which at least one friction wheel is provided with a plurality of sliding elements which are mounted in the friction wheel so as to laterally adjoin one another and so as to be movable perpendicularly to the peripheral direction of the running surface, and which form the outer side of the running surface.

15. Transmission (1) according to Claim 14, in which the sliding elements are mounted in the friction wheel so as to be movable substantially in the radial direction of the friction wheel.

## Revendications

1. Transmission variable (1), comprenant
- un arbre de commande (21) et un arbre de sortie (20),
- une paire de coquilles de friction (30, 31) qui se font face par leurs surfaces concaves (37), dans laquelle les coquilles de friction (30, 31) peuvent tourner autour de leur axe central respectif (50, 51) et sont chaque fois couplées au moins radialement à l'arbre de commande (21) et à l'arbre de sortie (20), et
- un dispositif de roues de friction (40) disposé entre les coquilles de friction (30, 31) de façon réglable autour d'un axe de rotation (I), qui présente une paire de roues de friction (41, 42) supportées de façon rotative à l'intérieur de celui-ci et garantit un flux de force entre les coquilles de friction avec un rapport de transmission variable lors d'une rotation autour de l'axe de rotation (I), dans laquelle une roue de friction/une roue de friction respective (41, 42) peut être mise en contact par sa face de glissement avec une coquille de friction correspondante (30, 31) sur le côté de commande et sur le côté de sortie, dans laquelle les roues de friction (41, 42) présentent une distance respective par rapport au dispositif de roues de friction (40) réglable le long de leur axe de rotation (II), **caractérisée en ce que**
les roues de friction sont supportées dans le dispositif de roues de friction (40) chaque fois au moyen d'un corps annulaire de réception (51), qui est logé dans le dispositif de roues de friction (40) de façon coulissante essentiellement parallèlement à l'axe de rotation (II) des roues de friction (41, 42).

2. Transmission (1) selon la revendication 1, dans laquelle une chambre de pression (54a, 54b) est chaque fois formée entre les corps annulaires de réception (51) et une paroi centrale de séparation du dispositif de roues de friction (40), dans laquelle une variation de la pression dans la chambre de pression (54) provoque un glissement du corps annulaire de logement (51) par rapport au dispositif de roues de friction (40) essentiellement parallèlement à l'axe de rotation (II) des roues de friction (41, 42).

3. Transmission (1) selon la revendication 2, dans laquelle un fluide est introduit dans la chambre de pression respective (54a, 54b) à partir d'un dispositif d'alimentation externe, dans laquelle la chambre de pression (54a, 54b) est raccordée au dispositif d'alimentation externe au moyen d'un raccordement par tuyau souple ou au moyen d'un distributeur tubulaire rotatif (81) prévu sur le dispositif de roues de friction (40).

4. Transmission (1) selon l'une quelconque des revendications 1 à 3, dans lequel les corps annulaires de réception (51) sont précontraints chaque fois au moyen d'un dispositif de ressort en direction du dispositif de roues de friction (40).

5. Transmission (1) selon l'une quelconque des revendications 1 à 4, dans laquelle les roues de friction (41, 42) sont couplées radialement l'une à l'autre, en particulier au moyen d'une liaison par un bouton crénelé, une liaison par un arbre de prise de force ou une liaison par languette et rainure (61).

6. Transmission (1) selon l'une quelconque des revendications 1 à 5, dans laquelle la surface de glissement prévue sur une périphérie extérieure d'une roue de friction respective présente, par rapport au milieu de sa zone de contact avec une coquille de friction correspondante, un diamètre essentiellement au moins plus grand que la rayon de la surface concave (37) de la coquille de friction.

7. Transmission (1) selon l'une quelconque des revendications 1 à 6, dans laquelle la surface de glissement d'une roue de friction respective (41, 42) présente un bombement conique adapté à la surface concave (37) des coquilles de friction (30, 31).

8. Transmission (1) selon l'une quelconque des revendications 1 à 7, dans laquelle le dispositif de roues de friction (40) peut être positionné entre les coquilles de friction (30, 31) de telle manière que le sens de rotation de l'arbre de sortie (20) soit contraire au sens de rotation de l'arbre de commande (21), afin de prévoir une marche arrière.

9. Transmission (1) selon la revendication 8, dans laquelle seule une des deux roues de friction peut être mise en contact avec les coquilles de friction (30, 31) sur le côté de commande et sur le côté de sortie, du même côté d'un plan dans lequel l'axe central au moins de la coquille de friction côté commande est situé et qui est essentiellement parallèle à l'axe de rotation (I) du dispositif de roues de friction (40), dans laquelle, dans cette position de la roue de friction, son axe de rotation (II) est essentiellement orthogonal à l'axe de rotation de l'arbre de commande et/ou de l'arbre de sortie.

10. Transmission (1) selon l'une quelconque des revendications 1 à 9, dans laquelle au moins une des deux coquilles de friction (30, 31) est pourvue d'enroulements de champ magnétique pour le déplacement du dispositif de roues de friction (40) autour de l'axe de rotation (I).

11. Transmission (1) selon l'une quelconque des revendications 1 à 10, dans laquelle la surface concave (37) d'au moins une des deux coquilles de friction (30, 31) et/ou une surface de glissement d'au moins une des deux roues de friction présente une structuration de surface.

12. Transmission (1) selon l'une quelconque des revendications 1 à 11, dans laquelle une bague de roue est posée sur au moins une des deux roues de friction, avec laquelle la roue de friction (41, 42) roule sur la coquille de friction correspondante (30, 31).

13. Transmission (1) selon la revendication 12, dans laquelle la bague de roue présente un plus grand diamètre que la roue de friction correspondante (41, 42).

14. Transmission (1) selon l'une quelconque des revendications 1 à 13, dans laquelle au moins une roue de friction est pourvue d'éléments de glissement, qui sont montés de façon latéralement adjacente l'un à l'autre dans la roue de friction et qui peuvent coulisser perpendiculairement à la direction périphérique de la surface de glissement, et qui forment le côté extérieur de la surface de glissement.

15. Transmission (1) selon la revendication 14, dans laquelle les éléments de glissement peuvent coulisser dans la roue de friction essentiellement en direction radiale de la roue de friction.
